# EUROPEAN PATENT SPECIFICATION

(11) **EP 4 640 031 B1**
(45) Date of publication and mention of the grant of the patent: **02.12.2026**
(21) Application number: 25162480.5
(22) Date of filing: 10.03.2025
(51) Int. Cl.: A01D 34/66, A01D 34/78, A01D 34/86, A01D 69/02

(54) **STAND-ON MOWER**
STANDMÄHER
TONDEUSE À GAZON À MONTAGE VERTICAL

(30) Priority: 26.04.2024 CN 202410521053; 08.08.2024 CN 202411089802
(43) Date of publication of application: 29.10.2025
(73) Proprietor: Nanjing Chervon Industry Co., Ltd., Nanjing, Jiangsu 211106 (CN)
(72) Inventor: WEI, Tianfang, Nanjing (CN); SHANG, Zhuxian, Nanjing (CN); LIU, Runze, Nanjing (CN); ZHANG, Tao, Nanjing (CN); ZHANG, Rui, Nanjing (CN); LI, Li, Nanjing (CN)
(74) Representative: Sun, Yiming

(56) References cited:
- WO-A1-2023/030296
- WO-A1-2024/064793
- WO-A1-2024/260396
- CN-A- 115 804 290

## Description

### TECHNICAL FIELD

The present invention relates to an outdoor garden power tool and, in particular, to a stand-on mower.

### BACKGROUND

A mower is a common mowing device with high efficiency and easy to operate. A standing platform is generally disposed at the rear of the mower and used for an operator to stand on. During outdoor operation, mowing is performed under working conditions such as a slope. During working on the slope, a walking assembly of the stand-on mower is required to provide sufficient traction so that the stand-on mower can overcome the gravity due to its own weight and move uphill stably.

This part provides background information related to the present invention, and the background information is not necessarily the existing art.

CN115804290A provides a standing type mower. The standing type mower comprises a rack; the walking mechanism is arranged on the rack and comprises two front wheels and two rear wheels opposite to the front wheels; the hub motor is arranged in the rear wheel and drives the rear wheel to rotate; one end of the motor base is connected with the rack, and the other end of the motor base is connected with the hub motor; the standing part comprises a pedal which is connected with the rack; wherein the pedal part is located between the two rear wheels, and the end, close to the front wheel direction, of the pedal is located between the front wheel and the axis of the two rear wheels. The lawn mower is simple in structure, compact in space and convenient to install, the rear space of the lawn mower is saved for people to stand while the structural strength requirement of the lawn mower is met, the gravity center of the standing human body is designed on the midpoint of the axes of the two rear wheels, and therefore when the lawn mower turns at a high speed, centrifugal force cannot be generated, a user cannot be thrown out, and the user experience is improved. Therefore, the safety of the user is ensured.

WO2023030296A1 discloses a garden tool comprising a tool body, at least two traveling wheels respectively positioned at two sides of the tool body; and drive units mounted in rims of the travelling wheels. The drive units are mounted in the rims, so that the overall axial size of a travelling unit is reduced, the transverse widths of garden tools, such as a lawn mower are reduced, and more transverse spaces are reserved for the garden tools, such as the lawn mower under the condition of the same width. These spaces can be used for mounting structures such as a battery compartment and a standing pedal, so that the garden tools, such as the lawn mower can be designed to have lower centers of gravity, thereby improving the stability of the garden tools.

WO2024064793A1 discloses a utility vehicle including a frame, a battery compartment, a battery pack, a motor, a ground engaging element, and a control. The battery compartment is supported by the frame and has an internal bus bar. The battery compartment had a housing and a lid pivotally coupled to the housing at a pivot point positioned proximate a first side of the vehicle. The battery pack is removably supported within the battery compartment and is placed in electrical contact with a power circuit as a consequence of being inserted into the battery compartment and removed from electrical contact with the power circuit as a consequence of being removed from the battery compartment. The lid is configured to be movable between a closed position and an open position where the battery pack within the battery compartment is accessible by the operator from a second side of the vehicle.

### SUMMARY

An object of the present invention is to solve or at least alleviate part or all of the preceding problems. Therefore, an object of the present invention is to provide a stand-on mower with a strong driving force and moving uphill stably.
**To achieve the preceding object, the present invention is as defined in the appended set of claims.**

### BRIEF DESCRIPTION OF DRAWINGS

FIG. 1 is a structural view of a stand-on mower as an example of the present invention.
FIG. 2 is a schematic view illustrating that a power supply is adapted to different power tools as an example of the present invention.
FIG. 3 is a partial structural view of a walking assembly and a frame as an example of the present invention.
FIG. 4 is a bottom view of a stand-on mower as an example of the present invention.
FIG. 5 is a schematic view of a stand-on mower as an example of the present invention from another angle.
FIG. 6 is a schematic view of the stand-on mower of FIG. 5 in a manned state.
FIG. 7 is a partial structural view of a support mechanism as an example of the present invention.
FIG. 8 is a partial sectional view of a stand-on mower as an example of the present invention.
FIG. 9 is a partial structural view of a standing platform as an example of the present invention.
FIG. 10 is a schematic view of a standing platform as an example of the present invention from another angle.
FIG. 11 is a schematic view of a standing platform as an example of the present invention from another angle.
FIG. 12 is a schematic view of a standing platform as an example of the present invention from another angle.
FIG. 13 is a schematic view of a standing platform as an example of the present invention from another angle, where a connecting piece is disposed within a foot pedal.
FIG. 14 is a schematic view of a standing platform as an example of the present invention from another angle, where a connecting piece is disposed out of a foot pedal.
FIG. 15 is a schematic view of another standing platform as an example of the present invention.
FIG. 16 is an enlarged view of part A in FIG. 15.
FIG. 17 is a sectional view of FIG. 15.
FIG. 18 is a structural view of a power supply and a heat dissipation assembly as an example of the present invention.
FIG. 19 is a structural view illustrating that a station is in a working state as an example of the present invention.
FIG. 20 is a structural view illustrating from another angle that a station is in a working state as an example of the present invention.
FIG. 21 is a structural view illustrating that a station is in a stored state as an example of the present invention.
FIG. 22 is a structural view of a stand-on mower as an example of the present invention.
FIG. 23 is a control schematic of the present invention.
FIG. 24 is a control block diagram of a control assembly of the present invention.
FIG. 25 is a structural diagram of an electric control box of the present invention.
FIG. 26 is a structural view of a stand-on mower as an example of the present invention, where a compartment cover of a battery compartment is removed.
FIG. 27 is a control block diagram of an active adjustment mechanism for a mowing deck of the present invention.
FIG. 28 is a front view of a stand-on mower as an example of the present invention.
FIG. 29 is an exploded view of a front illumination assembly.

### DETAILED DESCRIPTION

Before any examples of this invention are explained in detail, it is to be understood that this invention is not limited to its application to the structural details and the arrangement of components set forth in the following description or illustrated in the above drawings.

In this invention, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this invention, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this invention generally indicates that the contextual associated objects belong to an "and/or" relationship.

In this invention, the terms "connection", "combination", "coupling" and "installation" may be direct connection, combination, coupling or installation, and may also be indirect connection, combination, coupling or installation. For example, direct connection means that two members or assemblies are connected together without intermediaries, and indirect connection means that two members or assemblies are respectively connected with at least one intermediate member and the two members or assemblies are connected by the at least one intermediate member. In addition, "connection" and "coupling" are not limited to physical or mechanical connections or couplings, and may include electrical connections or couplings.

In this invention, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this invention, those skilled in the art will understand that a function performed by an assembly may be performed by one assembly, multiple assemblies, one member, or multiple members. Likewise, a function performed by a member may be performed by one member, one assembly, or a combination of members.

In this invention, the terms "up", "down", "left", "right", "front", "rear" and other directional words are described based on the orientation or positional relationship shown in the drawings, and should not be understood as limitations to the examples of this invention. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this invention, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this invention, the term "device", "module" or "unit" may be implemented in the form of hardware or software to achieve specific functions.

In this invention, the terms "computing", "judging", "controlling", "determining", "recognizing" and the like refer to the operations and processes of a computer system or similar electronic computing device (e.g., controller, processor, etc.).

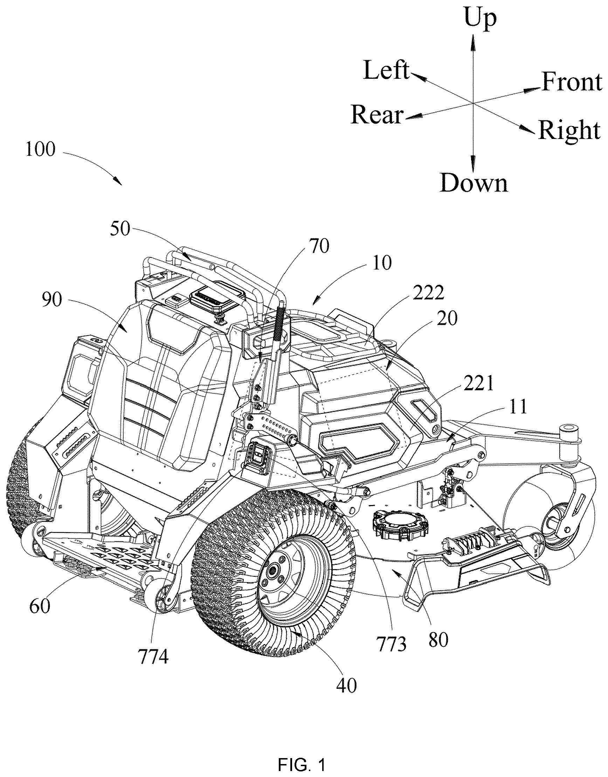

As shown in FIGS. 1 to 5, the present invention discloses a stand-on working machine, and a user standing on the stand-on working machine may operate it to perform a target operation, such as mowing a lawn and vegetation, cleaning the ground, or clearing snow. In this example, a stand-on mower 100 is used as an example of the stand-on working machine. The stand-on mower 100 may be operated by the user standing on it to mow the lawn and other vegetation. In the disclosure of this specification, front, rear, left, right, up, and down are described as directions shown in FIG. 1. When the user stands on the stand-on mower 100 on the ground, it is defined that the direction which the user faces is the front, the direction which the user faces away from is the rear, the direction on the left-hand side of the user is the left, the direction on the right-hand side of the user is the right, the direction towards the ground is down, and the direction away from the ground is up. In addition to the stand-on mower 100, the technical solutions in the present invention are applicable to other stand-on working machines such as a stand-on snow thrower and a stand-on cleaning machine.

The stand-on mower 100 includes a power supply 20, a body portion 10, a central control mechanism 50, and a support mechanism 90. The body portion 10 serves as a main part of the stand-on mower 100, and the power supply 20, the central control mechanism 50, and the support mechanism 90 are formed on or connected to the body portion 10.

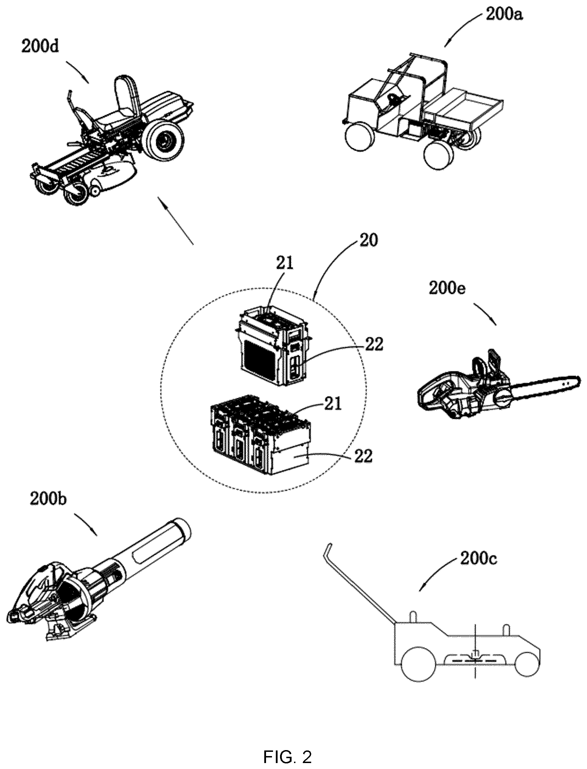

The power supply 20 includes multiple battery packs 21 and is configured to power at least a walking electric motor or a mowing electric motor. At least one of the multiple battery packs 21 is detachably mounted to a coupling portion of the stand-on mower 100. In some examples, the coupling portion includes a battery compartment 22. Optionally, the multiple battery packs 21 are configured to be detachable from the stand-on mower 100 to supply power to power tools or an all-terrain vehicle 200a. For example, FIG. 2 shows a power supply platform of the battery packs 21. It is to be understood that the battery packs 21 can supply power to power tools on the power supply platform. Optionally, the power tools may be garden tools, such as a grass trimmer, a blower 200b, and a riding mower 200d. The power tools 200 may be handheld power tools, such as a chainsaw 200e and a hedge trimmer. The power tools may be hand-push power tools, such as a push snow thrower and a push mower 200c. The power tools may be drilling tools, sawing tools, or electric garden tools.

Still referring to FIG. 1, the body portion 10 includes a frame 11, a cutting assembly 80, a walking assembly 40, and a control assembly 70. The frame 11 is used for mounting the cutting assembly 80, the walking assembly 40, the central control mechanism 50, and the support mechanism 90.

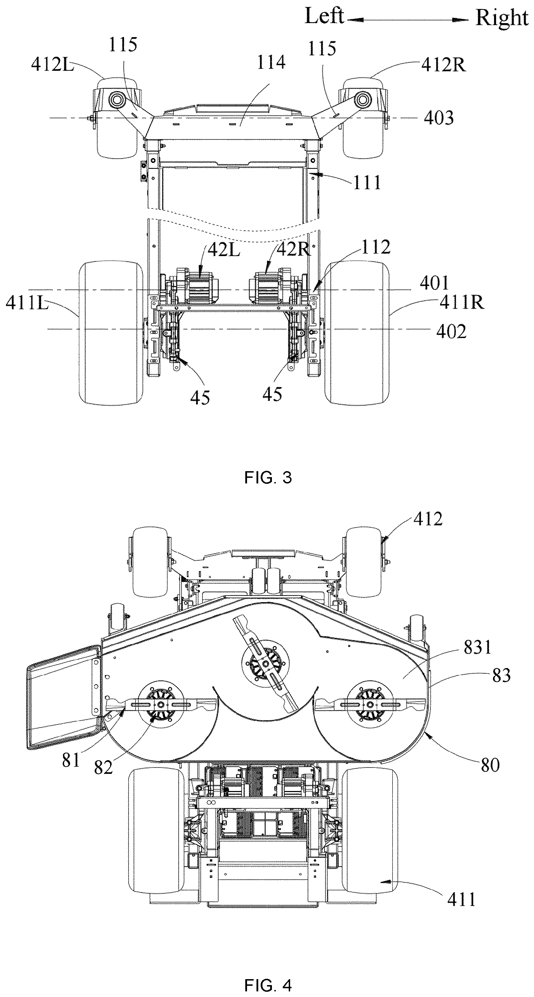

As shown in FIG. 4, the cutting assembly 80 includes a mowing element for mowing grass and a mowing motor 82 for driving the mowing element. In this example, the mowing element is a mowing blade 81, and the mowing motor 82 is specifically configured to be a mowing electric motor. The mowing electric motor 82 is used subsequently instead of the mowing motor, which is not to limit the present invention.

In some examples, the cutting assembly 80 includes multiple mowing blades 81 and respective mowing electric motors 82 for driving the mowing blades 81. That is to say, multiple mowing electric motors 82 are disposed. In some examples, the cutting assembly 80 includes multiple mowing blades 81 and mowing electric motors 82 for driving the mowing blades 81, where one mowing electric motor 82 is disposed, or the number of mowing electric motors 82 is less than the number of mowing blades 81. That is to say, one mowing electric motor 82 may drive multiple mowing blades 81.

As shown in FIG. 3, the walking assembly 40 supports the body portion 10 and is configured to drive the stand-on mower 100 to walk. The walking assembly 40 includes walking wheels 411 and 412 and a walking electric motor 42. In this example, the walking assembly 40 includes at least two walking wheels. The walking assembly 40 includes rear walking wheels 411 and front walking wheels 412. Optionally, the cutting assembly 80 is mounted at the bottom of the frame 11 and located between the front walking wheels 412 and the rear walking wheels 411. Optionally, the rear walking wheels 411 include a left rear walking wheel 411L and a right rear walking wheel 411R. The front walking wheels 412 include a left front walking wheel 412L and a right front walking wheel 412R. The walking electric motor 42 drives the rear walking wheels 411 or the front walking wheels 412 to rotate, so as to implement a walking function of the stand-on mower 100. Optionally, one, two, three, or four walking electric motors 42 may be provided. In this example, at least two walking electric motors 42 are provided. For example, two walking electric motors 42 are provided, where the two walking electric motors 42 drive the left rear walking wheel 411L and the right rear walking wheel 411R respectively. For example, the left rear walking wheel 411L and the right rear walking wheel 411R are drive wheels of the stand-on mower. Optionally, the front walking wheels 412 are configured to be omni wheels so that the stand-on mower 100 can turn in a direction deviating from a front and rear direction. For ease of reference, the walking electric motor 42 for driving the left rear walking wheel 411L is set as a first walking electric motor 42L, and the walking electric motor 42 for driving the right rear walking wheel 411R is set as a second walking electric motor 42R. In some examples, the walking electric motor 42 may be a hub motor or a wheel-side motor.

In this example, the power supply 20 is configured to power at least the walking assembly 40 to enable the drive wheels to output torque to drive the stand-on mower to walk, where the ratio of maximum output torque of a single drive wheel (for example, the left rear walking wheel 411L or the right rear walking wheel 411R) to an unladen weight of the stand-on mower 100 is greater than or equal to 1.2 N·m/kg. In this example, the first walking electric motor 42L drives the left rear walking wheel 411L, and the second walking electric motor 42R drives the right rear walking wheel 411R. It is to be understood that the single drive wheel includes one of the left rear walking wheel 411L or the right rear walking wheel 411R. For ease of reference, the left rear walking wheel 411L is used as the single drive wheel subsequently, that is, the single drive wheel is 411L. In some examples, the ratio of the maximum output torque of the single drive wheel 411L to the unladen weight of the stand-on mower 100 is greater than or equal to 1.1 N·m/kg. In some examples, the ratio of the maximum output torque of the single drive wheel 411L to the unladen weight of the stand-on mower 100 is greater than or equal to 1.0 N·m/kg. In some examples, the ratio of the maximum output torque of the single drive wheel 411L to the unladen weight of the stand-on mower 100 is greater than or equal to 1.3 N·m/kg. In some examples, the ratio of the maximum output torque of the single drive wheel 411L to the unladen weight of the stand-on mower 100 is greater than or equal to 1.4 N·m/kg. In this example, the ratio of maximum output power of the single drive wheel 411L to the unladen weight is greater than or equal to 8.7 W/kg. In some examples, the ratio of the maximum output power of the single drive wheel 411L to the unladen weight is greater than or equal to 8.6 W/kg. In some examples, the ratio of the maximum output power of the single drive wheel 411L to the unladen weight is greater than or equal to 8.5 W/kg. In some examples, the ratio of the maximum output power of the single drive wheel 411L to the unladen weight is greater than or equal to 8.8 W/kg. In some examples, the ratio of the maximum output power of the single drive wheel 411L to the unladen weight is greater than or equal to 8.9 W/kg. In some examples, the ratio of the maximum output power of the single drive wheel 411L to the unladen weight is greater than or equal to 9.0 W/kg. It is to be interpreted that the unladen weight of the stand-on mower 100 is defined as an overall weight of the stand-on mower 100 when all battery packs 21 accommodable in the battery compartment 22 of the stand-on mower 100 are mounted and the user is not carried.

As an outdoor walking apparatus, the stand-on mower 100 performs mowing under working conditions such as a slope during outdoor operation. During working on the slope, the walking assembly 40 of the stand-on mower 100 is required to provide sufficient traction so that the stand-on mower 100 can overcome the gravity due to its own weight and move uphill stably. Meanwhile, the walking assembly 40 is also required to ensure the travel stability of the stand-on mower 100 to prevent vehicle slipping and loss of control. In this example, the ratio of the maximum output torque of the single drive wheel 411L of the walking assembly 40 to the unladen weight of the stand-on mower 100 is defined so that the maximum output torque of the drive wheel receivable per unit weight of the stand-on mower 100 is defined. The higher the ratio of the maximum output torque of the single drive wheel 411L to the unladen weight of the stand-on mower 100, the greater the maximum output torque of the drive wheel receivable per unit weight, which can indicate that the walking electric motor 42 of the stand-on mower 100 has a strong driving force, and the overall weight of the stand-on mower 100 is more reasonable. In this example, the ratio of the maximum output power of the single drive wheel 411L of the walking assembly 40 to the unladen weight of the stand-on mower 100 is defined so that the maximum output power of the drive wheel receivable per unit weight of the stand-on mower 100 is defined. The higher the ratio of the maximum output power of the single drive wheel 411L to the unladen weight of the stand-on mower 100, the greater the maximum output power of the drive wheel receivable per unit weight, which can indicate that the walking electric motor of the stand-on mower 100 has a strong driving force, and the overall weight of the stand-on mower 100 is more reasonable.

In this example, the walking assembly 40 includes at least two drive wheels (that is, the left rear walking wheel 411L and the right rear walking wheel 411R), and the ratio of rated output power of the walking assembly 40 to the unladen weight is greater than or equal to 7 W/kg. In some examples, the ratio of the rated output power of the walking assembly 40 to the unladen weight is greater than or equal to 7.1 W/kg. In some examples, the ratio of the rated output power of the walking assembly 40 to the unladen weight is greater than or equal to 7.2 W/kg. In this example, the ratio of the rated output power of the walking assembly 40 to the unladen weight of the stand-on mower 100 is defined, which may be understood as a thrust-to-weight ratio of the stand-on mower 100. The higher the thrust-to-weight ratio, the greater the thrust of the drive wheels (411L and 411R) receivable per unit weight of the stand-on mower 100, which can indicate that the walking electric motor of the stand-on mower 100 has a strong driving force, and the overall weight of the stand-on mower 100 is more reasonable. It is to be interpreted that the unladen weight of the stand-on mower 100 is defined as the overall weight of the stand-on mower 100 when all the battery packs 21 accommodable in the battery compartment 22 of the stand-on mower 100 are mounted and the user is not carried.

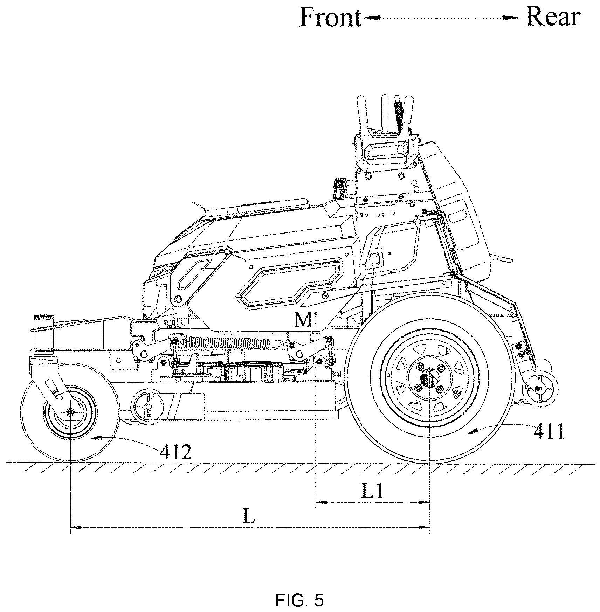

As shown in FIGS. 3 to 5, the left front walking wheel 412L and the right front walking wheel 412R rotate around a front axis 403, and the left rear walking wheel 411L and the right rear walking wheel 411R rotate around a rear axis 402. It is to be interpreted that the front axis 403 is a line connecting a spindle of the left front walking wheel 412L and a spindle of the right front walking wheel 412R, and the front axis 403 is not necessarily a central line of a physical shaft. As shown in FIG. 5, a wheelbase L of the whole vehicle is the distance between the front axis 403 and the rear axis 402. In the case where the whole machine is unloaded, the ratio of the distance L1 between the center of gravity M of the stand-on mower 100 and the rear axis 402 to the wheelbase L of the whole vehicle is greater than or equal to 0.2 and less than or equal to 0.35. In the case where the whole machine is unloaded, the ratio of the distance L1 between the center of gravity M of the stand-on mower 100 and the rear axis 402 to the wheelbase L of the whole vehicle is greater than or equal to 0.2 and less than or equal to 0.3. In the case where the whole machine is unloaded, the ratio of the distance L1 between the center of gravity M of the stand-on mower 100 and the rear axis 402 to the wheelbase L of the whole vehicle is greater than or equal to 0.25 and less than or equal to 0.35. The position of the center of gravity is reasonable so that the stand-on mower has a stronger slope travel capability.

The walking assembly 40 further includes a transmission assembly 45 that transmits driving forces of the walking electric motors 42 to the drive wheels. The transmission assembly 45 is configured to convert or transmit output torque of the walking electric motors 42 and transfer the torque to the drive wheels. In this example, the walking electric motor 42 includes an output shaft extending along a first axis 401. The left rear walking wheel 411L and the right rear walking wheel 411R rotate around the rear axis 402, where the first axis 401 is parallel to the rear axis 402 but does not coincide with the rear axis 402. In some examples, the first axis 401 coincides with the rear axis 402. In this example, the transmission assembly 45 is configured to be a reduction mechanism, such as a gear transmission assembly 45 for speed reduction and torque increase. Therefore, the output torque of the walking electric motors multiplied by a gear ratio of the transmission assembly is the output torque of the drive wheels. In some examples, when the gear ratio of the transmission assembly 45 is 1, the output torque of the walking electric motors is the same as the output torque of the drive wheels.

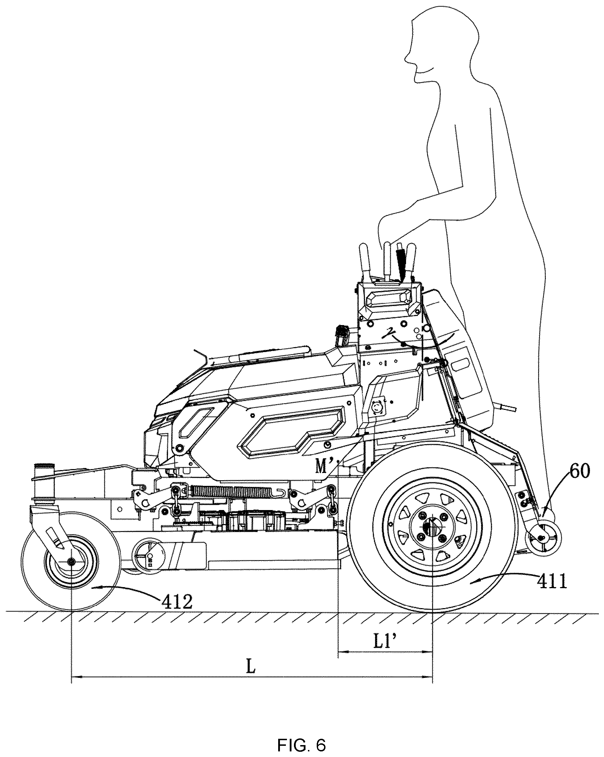

As shown in FIGS. 1 and 6, the support mechanism 90 includes a standing platform 60, and the standing platform 60 has a standing surface configured to support an operator. The standing platform 60 is disposed at the rear of the frame 11, connected to the frame 11, and located between the two rear walking wheels 411. When the user stands on the standing platform 60 of the support mechanism 90 to operate the stand-on mower 100, the stand-on mower 100 is in a manned state. When the stand-on mower 100 is in the manned state, a weight distribution of the front walking wheels 412 accounts for 20% to 30% of the overall weight. In some examples, when the stand-on mower 100 is in the manned state, the weight distribution of the front walking wheels 412 accounts for 24% to 27% of the overall weight. Since different weights of the user affect the overall weight in the manned state, the weight of the user is uniformly defined as 90 kg. It is to be understood that the unladen weight of the stand-on mower 100 plus 90 kg is the overall weight in the manned state. When the stand-on mower 100 switches from the unloaded state to the manned state, the weight of the user is mainly loaded near the rear walking wheels 411, and the position of the overall center of gravity of the stand-on mower 100 changes. As shown in FIG. 6, in the manned state, the ratio of the distance L1' between the overall center of gravity M' of the stand-on mower 100 and the rear axis 402 to the wheelbase of the whole vehicle is greater than or equal to 0.2 and less than or equal to 0.3.

In this example, the output power and the output torque of the drive wheels 411L and 411R of the stand-on mower 100 are reasonably set so that the ratio of the output power and the output torque with the unladen weight, which is higher than those of related products, is provided, and the relationship between the center of gravity and the rear walking wheels 411 that provide the driving force is reasonably set, ensuring the travel and working capability of the stand-on mower 100 on the slope. In this example, when the stand-on mower 100 is on a slope inclined at an angle of 20° or less, a straight travel capability of the stand-on mower 100 in a slope width direction reaches a deviation of 3 meters or less within 50 meters.

In this example, the rear walking wheels 411 include the left rear walking wheel 411L and the right rear walking wheel 411R. The left rear walking wheel 411L and the right rear walking wheel 411R are each configured to have specifications of 23×10.5-12. The output torque of the single drive wheel 411L is greater than or equal to 360 N·m. In some examples, the output torque of the single drive wheel 411L is greater than or equal to 370 N·m. In some examples, the output torque of the single drive wheel 411L is greater than or equal to 380 N·m.

Still referring to FIGS. 1 and 7 to 14, the standing platform 60 is, for example, a foot pedal 61, and the foot pedal 61 is disposed at the rear of the frame 11, connected to the frame 11, and located between the two rear walking wheels 411. A damper 62 is disposed between the foot pedal 61 and the frame 11, and a damping value of the damper 62 is greater than or equal to 500 N·s/m. In some examples, the damper 62 is disposed between the foot pedal 61 and the frame 11, and the damping value of the damper 62 is greater than or equal to 1000 N·s/m. In some examples, the damper 62 is disposed between the foot pedal 61 and the frame 11, and the damping value of the damper 62 is greater than or equal to 1500 N·s/m. In some examples, the damper 62 is disposed between the foot pedal 61 and the frame 11, and the damping value of the damper 62 is greater than or equal to 2000 N·s/m. In some examples, the damper 62 is disposed between the foot pedal 61 and the frame 11, and the damping value of the damper 62 is greater than or equal to 2500 N·s/m. In some examples, the damper 62 is disposed between the foot pedal 61 and the frame 11, and the damping value of the damper 62 is greater than or equal to 3000 N·s/m. In some examples, the damper 62 is disposed between the foot pedal 61 and the frame 11, and the damping value of the damper 62 is greater than or equal to 3500 N·s/m. In some examples, the damper 62 is disposed between the foot pedal 61 and the frame 11, and the damping value of the damper 62 is greater than or equal to 4000 N·s/m. The damper 62 is connected to the foot pedal 61 and the frame 11. Unlike an outdoor working machine with a seat, the stand-on mower 100 requires the user to stand on the foot pedal 61 to operate the machine. A long time of standing puts a requirement on the comfort of the foot pedal 61 in supporting the feet of the user. When the stand-on mower 100 travels on a rough section, the foot pedal 61 impacts greatly on the user with the frequency and amplitude of vibration of the whole vehicle. In one aspect, the operation and observation of the user are affected. In the other aspect, the user is confronted with a safety hazard. In this example, the damper 62 is connected to the foot pedal 61 and the frame 11. The damper 62 provides resistance to reduce the vibration of the foot pedal 61 with the frame 11. Meanwhile, the damper 62 provides a damping value greater than or equal to 500 N·s/m to provide better vibration attenuation. If the damping value is too small, the shock absorption effect cannot be achieved. If the damping value is too large, too firm shock absorption is performed on the foot pedal 61. Moreover, after the damping value of the damper 62 is balanced with an overall force on the foot pedal 61, the degree of vibration attenuation gradually decreases. Even if the damping value continues to increase, an improvement in the shock absorption effect may diminish.

A support plate 615 is disposed below the foot pedal 61, and an elastic assembly 63 is disposed between the foot pedal 61 and the support plate 615. In some examples, the standing platform 60 includes at least one set of elastic assemblies 63 which are symmetrically distributed about an axis of the damper62. For example, when the standing platform 60 includes one set of elastic assemblies 63, the elastic assemblies 63 are symmetrical about the axis of the damper 62. That is to say, a central axis of the elastic assemblies 63 coincides with the axis of the damper 62. For example, when the standing platform 60 includes two or more sets of elastic assemblies 63, the two or more sets of elastic assemblies 63 are symmetrically distributed about the axis of the damper 62. In some examples, the standing platform 60 includes an elastic assembly 63 basically disposed in the middle of the foot pedal 61 on the front and rear direction. For example, the standing platform 60 includes one set of elastic assemblies 63, and the elastic assemblies 63 are disposed along an axis of the foot pedal 61. In this example, along the front and rear direction, the damper 62 and the elastic assemblies 63 are connected to the front side and the rear side of the foot pedal 61, respectively. In some examples, along the front and rear direction, the damper 62 and the elastic assemblies 63 are staggered in the front and rear direction. In this example, the damper 62 provides better vibration attenuation in an up and down direction, and the elastic assemblies 63 below the foot pedal 61 balance the weight of the user to achieve a better shock absorption effect. In this example, the elastic assemblies 63 include a first elastic assembly 63a on the left side of the damper 62 and a second elastic assembly 63b on the right side of the damper 62. The first elastic assembly 63a and the second elastic assembly 63b each adopt compression elastic members, such as compression springs.

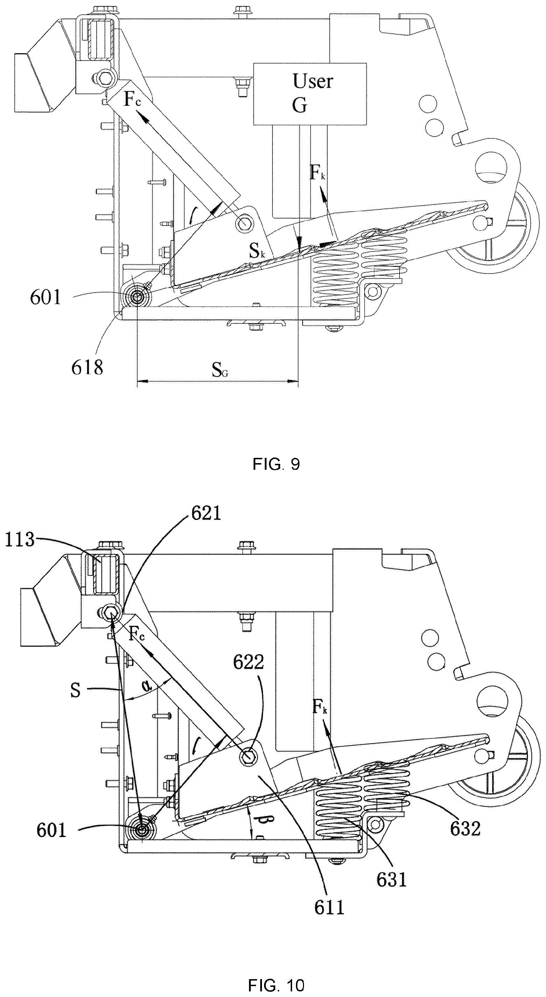

As shown in FIG. 9, the foot pedal 61 is rotatably connected to the frame 11 through a first spindle 618, and the centerline of the first spindle 618 is a third axis 601, where the third axis 601 is parallel to the rear axis 402 of the drive wheels. When the user stands on the foot pedal 61 of the stand-on mower 100 so that the foot pedal 61 is in a state of static equilibrium, selection calculation is performed, where a load is the gravity G of the user. In this example, the weight of the user is uniformly defined as 90 kg as described above, and under static equilibrium, $J ⋅ a = G ⋅ {S}_{G} - {F}_{c} ⋅ l + {F}_{k} ⋅ {S}_{k} .$

J denotes the rotational inertia of the foot pedal 61, a denotes an angular acceleration of rotation of the foot pedal 61, S_{G} denotes a vertical distance from the center of gravity of the standing user to the third axis 601, F_{c} denotes a damping force provided by the damper 62, l denotes a moment arm of the damper 62, Fₖ denotes an elastic force provided by the elastic assemblies 63, and Sₖ denotes a moment arm of the elastic force. Under the above static equilibrium, the elastic assemblies 63 mainly implement a support function to balance the body gravity. Secondly, the elastic assemblies 63 provide some resistance to perform vibration isolation. The damper 62 implements a damping function and is mainly used for absorbing vibration energy of the foot pedal 61.

The moment arm of the damper 62 is adjusted so that the resistance provided by the damper 62 is adjusted. In the unloaded state, that is, when the user is not standing on the foot pedal 61, the following formula applies: $l = s ⋅ sin α .$

As shown in FIG. 10, l denotes the moment arm of the damper 62, s denotes a vertical distance from a connection between a first end 621 of the damper 62 and the frame 11 to the third axis 601, and α denotes an inclination angle of the damper 62.

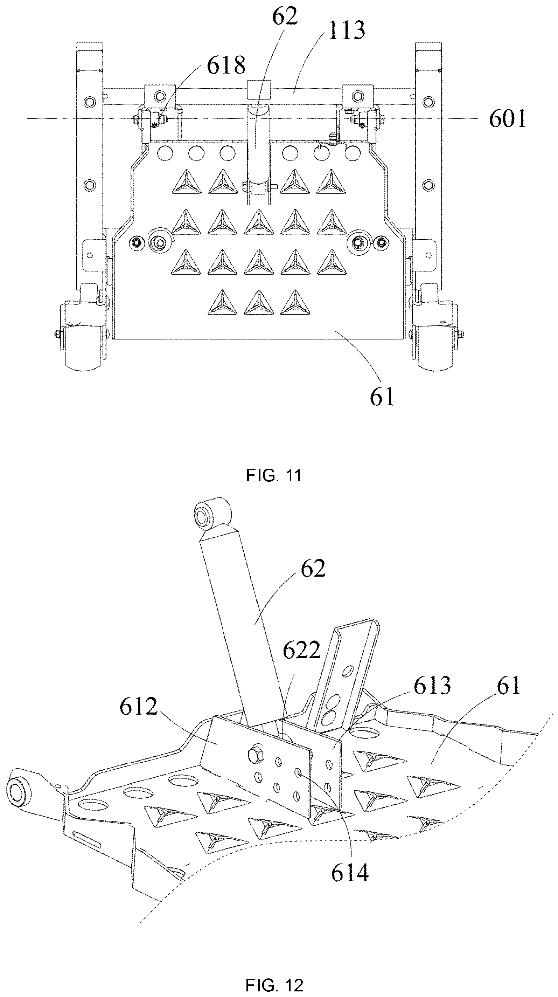

In this example, s is a fixed value, that is, the vertical distance from the connection between the first end 621 of the damper 62 and the frame 11 to the third axis 601 is not changed, and the inclination angle α of the damper 62 is adjusted so that the moment arm of the damper 62 is adjusted. The frame 11 includes a crossbeam 113, the foot pedal 61 includes a connecting piece 611, the first end 621 of the damper 62 is connected to the crossbeam 113, a second end 622 is connected to the connecting piece 611, and the connecting piece 611 is detachably connected to the damper 62. As shown in FIG. 12, the connecting piece 611 includes multiple connection points 614. When the second end 622 of the damper 62 is connected to any connection point 614, the damper 62 has different inclination angles α. A connection position of the damper 62 is changed so that the moment arm of the damper 62 is adjusted. For example, the second end 622 of the damper 62 is connected to the connection point 614 through detachable fasteners, such as a bolt and a nut. For example, the connecting piece 611 includes two plate-like structures including a first connecting plate 612 and a second connecting plate 613. The first connecting plate 612 and the second connecting plate 613 are disposed on the left side and the right side of the damper 62, respectively. With the first connecting plate 612 as an example, the multiple connection points 614 are arranged separately on the first connecting plate 612 along a horizontal direction and a vertical direction. Holes at the connection points 614 extend along a left and right direction.

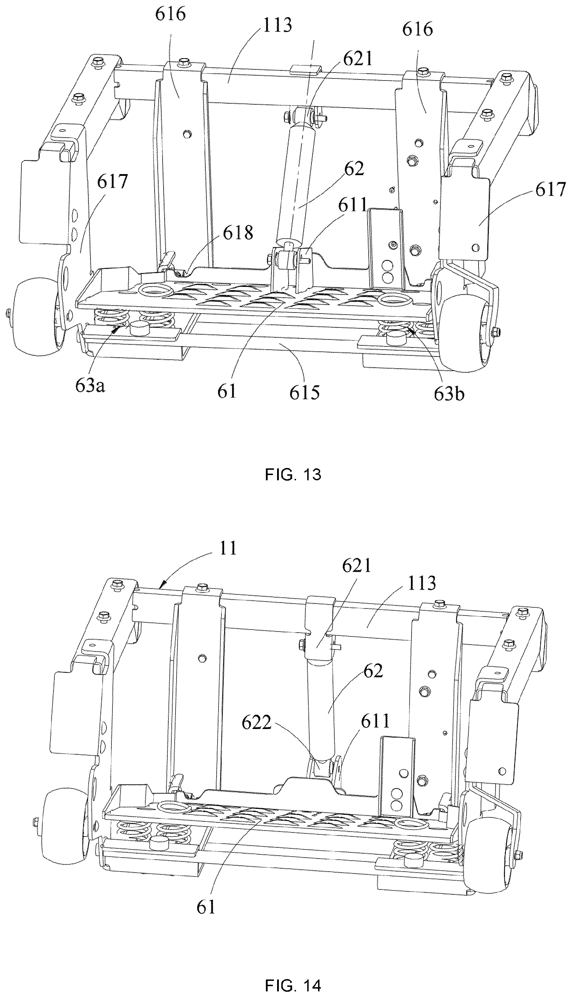

As shown in FIG. 13, in this example, the connecting piece 611 is disposed within the foot pedal 61. That is to say, along the up and down direction, an orthogonal projection of the connecting piece 611 is located within an orthogonal projection of the foot pedal 61. In some examples, as shown in FIG. 14, the connecting piece 611 extends out of the foot pedal 61, and the second end 622 of the damper 62 is connected to the front side of the foot pedal 61. That is to say, along the up and down direction, the orthogonal projection of the connecting piece 611 is located outside the orthogonal projection of the foot pedal 61. For example, along the up and down direction, the orthogonal projection of the connecting piece 611 is located before the orthogonal projection of the foot pedal 61. The connecting piece 611 is disposed out of the foot pedal 61, and the damper 62 is fixed to the frame 11 and the outside of the foot pedal 61 so that the user is provided with more standing space, and the damper 62 does not hinder the standing position of the user.

In some examples, the vertical distance from the connection between the first end 621 of the damper 62 and the frame 11 to the third axis 601 is adjusted so that the moment arm of the damper 62 is adjusted. For example, the damper 62 is detachably connected to the crossbeam 113 of the frame 11, and multiple connection points (not shown) at different heights are provided on the crossbeam 113. The connection position of the damper 62 is changed so that the moment arm of the damper 62 is adjusted.

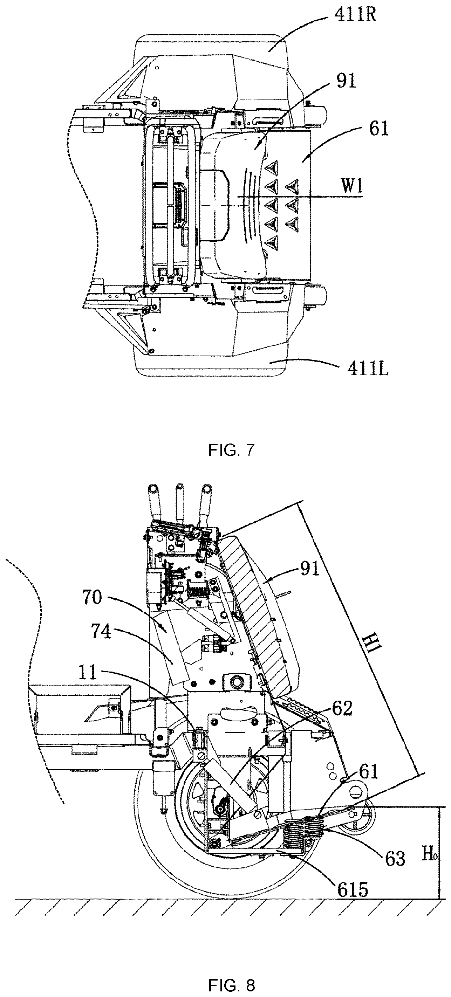

As shown in FIG. 10, the angle between the foot pedal 61 and a horizontal plane is defined as β. In the unloaded state, that is, when the user is not standing on the foot pedal 61, the angle between the foot pedal 61 and the horizontal plane is defined as an initial positional angle β₀ of the foot pedal 61. In the user carrying and traveling process of the foot pedal 61, an angle by which the foot pedal 61 moves is less than or equal to -10°, that is to say, β₀ - 10 ≤ β ≤ β₀. This ensures that the foot pedal 61 does not touch the bottom in the traveling process. In this example, β₀ is greater than or equal to 10°. For example, β₀ is defined as 15°. When the weight of the user is 60 kg to 90 kg and the foot pedal 61 is in the manned state, β is greater than or equal to 5° and less than or equal to 10°. As shown in FIG. 8, a vertical height from a highest point of the foot pedal 61 to the ground is defined as a ground clearance of the pedal. In the unloaded state, that is, when the user is not standing on the foot pedal 61, an initial ground clearance is H₀, where the initial ground clearance H₀ is greater than or equal to 200 mm. For example, the initial ground clearance H₀ is 250 mm.

As shown in FIGS. 9 to 14, with the first elastic assembly 63a as an example, the first elastic assembly 63a includes a first elastic member 631 and a second elastic member 632, and the first elastic member 631 and the second elastic member 632 are distributed along the front and rear direction of the stand-on mower 100. For example, the first elastic member 631 and the second elastic member 632 are staggered in the front and rear direction. Optionally, the first elastic member 631 and the second elastic member 632 include compression springs with at least two different specifications. Two compression springs with different specifications are used. Optionally, the first elastic member 631 and the second elastic member 632 include two compression springs with the same specifications. In the unloaded state, the first elastic member 631 and the second elastic member 632 are separately connected to the foot pedal, and the first elastic member 631 and the second elastic member 632 have different heights. Thus, when the load is less than a preset value, any one of the first elastic member 631 or the second elastic member 632 provides a support force for supporting the user, so as to be adapted to users with different weights. When the weight of the user is relatively light, only one compression spring is loaded with the weight of the user. When the weight of the user is relatively heavy, the two compression springs are separately loaded with the weight of the user. The preset value for the load may be preset and cannot be adjusted or set by the user. In some examples, the preset value for the load may be adjusted by the user, and the user may adjust the preset value for the load according to changes in the weight of the user and the load. For example, the first elastic member 631 and the second elastic member 632 provide different stiffness, the first elastic member 631 is disposed in front of the second elastic member 632, and the stiffness of the first elastic member 631 is greater than that of the second elastic member 632. For example, the first elastic member 631 and the second elastic member 632 provide the same stiffness, and the first elastic member 631 and the second elastic member 632 have different heights in the unloaded state.

Since the second elastic assembly 63b and the first elastic assembly 63a are symmetrically disposed and have basically the same structures, the structure of the second elastic assembly 63b is not described in detail.

In this example, the standing platform 60 uses a combination of the damper 62 and the elastic assemblies 63 that are separately disposed for shock absorption, the elastic assemblies 63 mainly implement the support function to balance the body gravity, and the damper 62 implements the damping function and is configured to absorb the vibration energy of the foot pedal 61. The elastic assemblies 63 are symmetrically disposed on two sides of the damper 62 to provide separate support for the feet of the user, which can separately provide adaptive support when the feet of the user apply different forces. The elastic assembly 63 is configured to be a multi-spring structure that adapts to different weights, the damper 62 is configured with an appropriate damping value, and the support force provided by the elastic assemblies 63 and the resistance provided by the damper 62 collaborate with each other so that the stand-on mower 100 can apply to various weights and achieve comprehensive shock absorption and support.

The standing platform 60 further includes first connecting members 616 for connecting the frame 11 to the foot pedal 61 and second connecting members 617 for connecting the support plate 615 to the frame 11. An end of a first connecting member 616 is connected to the crossbeam 113 of the frame 11, and the other end of the first connecting member 616 is rotatably connected to the foot pedal 61 through the first spindle 618. In some examples, the first connecting member 616 is formed on the frame 11, and the foot pedal 61 is rotatably connected to the first connecting member 616 through the first spindle 618. In this example, the first connecting member 616 extends along a direction perpendicular to the third axis 601. For example, the first connecting member 616 extends along the up and down direction. The first connecting members 616 are symmetrically disposed about the centerline of the damper 62. The second connecting members 617 are disposed on the left side and the right side of the foot pedal 61, respectively. The second connecting members 617 extend along a direction perpendicular to the third axis 601. For example, the second connecting members 617 extend along the up and down direction.

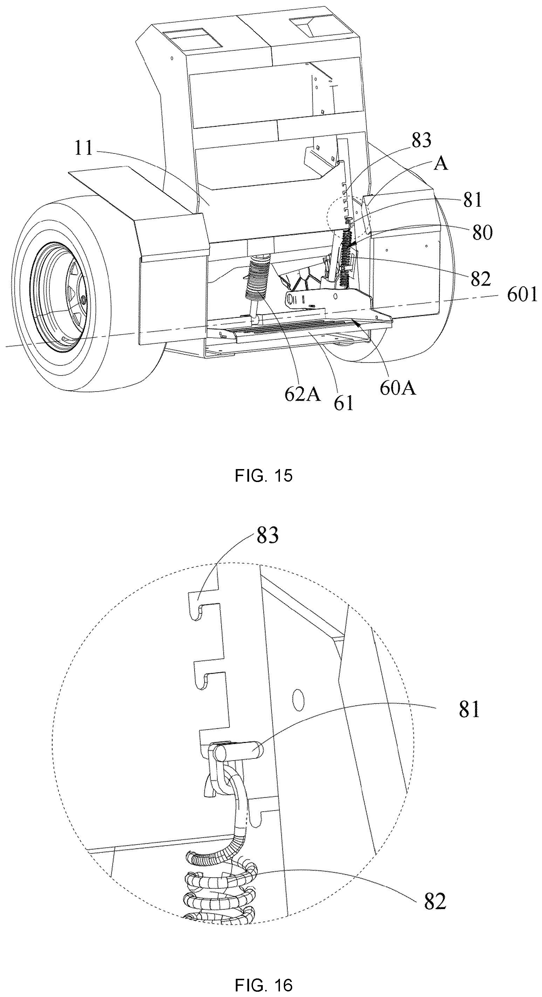

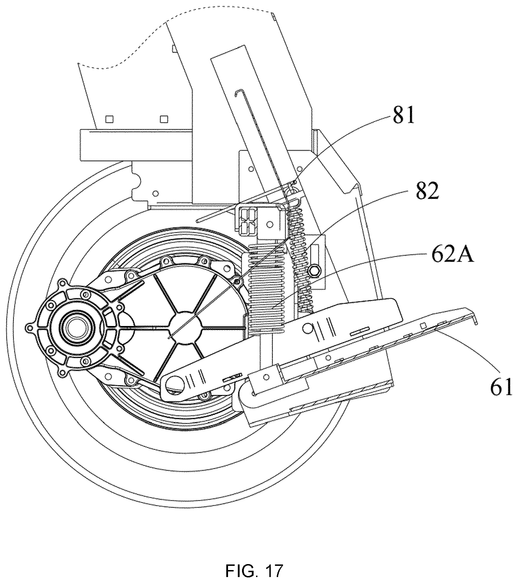

A standing platform 60A is used as another example of the present invention. As shown in FIGS. 15 to 17, the standing platform 60A includes an adjustment assembly 80 configured to adjust a preload of a damper 62A to match operators with different weights. Some structures or parts in FIGS. 15 to 17 are the same as those of the standing platform 60 in FIGS. 7 to 14 and use the same reference numerals as in FIGS. 7 to 14.

When the operator is not standing on the foot pedal 61, that is, when the foot pedal 61 provides no support force, the foot pedal 61 is at a first position. When the operator is standing on the foot pedal 61, the foot pedal 61 rotates around the third axis 601 to a second position (shown in FIG. 15). The damper 62A provides resistance directed to the movement or movement tendency of the foot pedal 61. In the working process of the stand-on mower, the stand-on mower oscillates and drives the operator to oscillate. Since the foot pedal 61 is in a floating connection, the damper 62A can absorb part of the oscillation of the foot pedal 61, achieving shock absorption.

The damper 62A is configured with the preload, where the preload is the resistance provided by the damper 62A for the foot pedal 61 when the foot pedal 61 does not support the operator (that is, when the foot pedal 61 is at the first position). The preload affects the oscillation amplitude of the foot pedal 61. If the preload is too large, the foot pedal 61 may risk touching a limit. If the preload is too small, the shock absorption effect is reduced. Therefore, to achieve an optimal shock absorption effect, the preload provided by the damper 62A for the foot pedal 61 needs to satisfy a preset condition. A magnitude of the preload is related to the weight of the operator, the support force provided by the foot pedal for the operator is related to the operator's weight, and the operators with different weights need to be matched with corresponding preloads so that the optimal shock absorption effect can be achieved.

The adjustment assembly 80 is operable to adjust the preload of the damper 62A so that when the foot pedal 61 supports the operator and the support force provided by the foot pedal 61 for the operator changes, the resistance provided by the damper 62A for the foot pedal 61 remains basically unchanged, so as to adapt to the operators with different weights, so that for the operators with different weights, the resistance provided by the damper 62A for the foot pedal 61 can satisfy the preset condition. The adjustment assembly 80 can adjust the preload of the damper 62A, so as to adapt to the operators with different weights, so that for the operators with different weights, the damper 62A can achieve a relatively good shock absorption effect. The adjustment assembly 80 adjusts a relative position between the foot pedal 61 and the frame so that when the foot pedal 61 is at the first position, resistance provided by the damper 62A for the foot pedal 61 is adjusted.

The adjustment assembly 80 includes an elastic element 82 and a setting portion 81. An end of the elastic element 82 is connected to the foot pedal 61, and the other end of the elastic element 82 is connected to the frame 11. The elastic element 82 applies an upward force to the foot pedal 61. The setting portion 81 can set a coupling position of the elastic element 82 to the frame 11 to set a magnitude of the force applied by the elastic element 82 to the foot pedal 61. The elastic element 82 may have multiple coupling positions to the frame 11, so as to adapt to the operators with different weights. When the operators with different weights stand on the foot pedal 61, the elastic element 82 is coupled to the frame 11 at different coupling positions so that the magnitude of the force applied by the elastic element 82 to the foot pedal 61 is set to compensate for the preload of the damper62A, and the operators with different weights can have substantially the same suspension experience.

The frame 11 is provided with multiple coupling portions 83, and the multiple coupling portions 83 are arranged at intervals along a height direction of the frame 11. The setting portion 81 is coupled to one of the coupling portions 83. The multiple coupling portions 83 may include two or more positions, such as five positions shown in FIG. 15. Assuming that a maximum weight capacity of the foot pedal 61 is 100 kg, when an operator with a weight of 100 kg stands on the foot pedal 61, the elastic element 82 is coupled to the lowest coupling portion 83. In this case, a suspension assembly 70 has the optimal shock absorption effect. When an operator with a weight less than 100 kg stands on the foot pedal 61, the coupling position of the elastic element 82 needs to be raised to compensate for the preload of the damper 62A so that the damper 62A is subjected to the same force as when the operator weighing 100 kg stands on the foot pedal 61. For example, when an operator with a weight of 80 kg to 100 kg stands on the foot pedal 61, the coupling position of the elastic element 82 may be moved one position up from the lowest position. When an operator with a weight of 60 kg to 80 kg stands on the foot pedal 61, the coupling position of the elastic element 82 may be moved two positions up from the lowest position. When an operator with a weight of 40 kg to 60 kg stands on the foot pedal 61, the coupling position of the elastic element 82 may be moved three positions up from the lowest position. When an operator with a weight lower than 40 kg stands on the foot pedal 61, the coupling position of the elastic element 82 may be moved four positions up from the lowest position, that is, moved to the topmost position.

In some examples, the coupling portion 83 may be an insertion portion, such as an insertion hole, and the setting portion 81 is an insertion pole, where the insertion pole is inserted into and mates with the insertion portion. In some examples, the coupling portion 83 may be a hanging portion, such as a hanging hole, and the setting portion 81 is a hook, where the hook is hung on and mates with the hanging portion. In some examples, the coupling portion 83 may be a clamping portion, such as a clamping groove, and the setting portion 81 is a snap, where the snap is fit into and mates with the clamping portion. Examples are provided above, which are not limiting.

In some examples, a limiting member is manually adjusted, that is, the setting portion 81 is manually coupled to the corresponding coupling portion 83. Since the user of the stand-on mower is typically unchanged, manual adjustment can satisfy the requirement. In some examples, the limiting member is automatically adjusted. For example, the setting portion 81 may be driven by an electric motor and a rack to be coupled to one of the coupling portions 83.

In some examples, two adjustment assemblies 80 are provided, where the two adjustment assemblies 80 are symmetrically distributed about the damper 62A. The two adjustment assemblies 80 may perform independent adjustment and may implement the same amount of adjustment or different amounts of adjustment. The two adjustment assemblies 80 may perform synchronous adjustment through a linkage mechanism. In some examples, more than two adjustment assemblies 80 are provided.

In some examples, a support system of the stand-on working machine is further disclosed. The stand-on working machine includes the frame 11 and the front walking wheels 412 and the rear walking wheels 411 that support the frame 11. The support system includes the standing platform 60 and the adjustment assembly 80. The standing platform 60 has at least the foot pedal 61 configured to support the operator, and the foot pedal 61 includes the first position for providing no support force and the second position for supporting the operator. The damper 62A absorbs or buffers at least part of the vibration between the foot pedal 61 and the frame 11. The adjustment assembly 80 is configured to adjust a relative position between the foot pedal 61 and the frame 11 so that when the foot pedal 61 is at the first position, the resistance provided by the damper 62A for the foot pedal 61 is adjust so that the resistance provided by the damper 62A for the foot pedal 61 satisfies the preset condition.

As shown in FIGS. 6 to 8, the support mechanism 90 further includes a cushion 91. The cushion 91 provides support for the body of the user when the user is standing on the foot pedal 61, and the user can lean against the cushion 91 to perform operations. In this example, the cushion 91 is inclined forward. During operation, a worker leans against the cushion 91 and can obtain more support, facilitating operation, reducing a risk of falling, and improving operation comfort. In some examples, as shown in FIG. 6, the angle γ between the cushion 91 and a vertical plane is 10° to 30°. For example, the angle γ between the cushion 91 and the vertical plane is 20°. That is, the worker leaning against the cushion 91 is inclined forward at an angle γ of 20° relative to the vertical plane. As shown in FIGS. 7 and 8, the vertical distance from a highest point of the cushion 91 to the foot pedal 61 is defined as H1, where H1 is greater than or equal to 800 mm so that the user can comfortably lean against the cushion. For example, H1 is 900 mm. When the stand-on mower 100 is projected onto the ground in the up and down direction, the foot pedal extends out of the rear of the cushion 91, and the distance W1 between the foot pedal and the cushion 91 is greater than or equal to 150 mm. For example, the distance between the foot pedal and the cushion 91 is 200 mm so that the user has enough space to stand.

In this example, the cushion 91 is detachably connected to the body portion 10. The cushion 91 may be detached from the body portion 10 when transportation or cleaning is required. The cushion 91 mates with the frame 11 through a limiting structure. When the cushion 91 needs to be fixed to the body portion 10, the limiting structure locks the cushion 91 to the frame 11. When the cushion 91 needs to be detached, the cushion 91 is released from the limiting structure through an unlocking operation, and the cushion 91 may be separated from the frame 11. Optionally, the limiting structure includes a threaded structure, a hook-and-hole structure, or a snap structure that can be moved. The unlocking operation drives the cushion to be released from the limiting structure, including one-click unlocking (for example, the limiting structure is pressed or toggled once to change from a limiting state to a release state) or including linear release and unlocking (for example, the limiting structure switches from the limiting state to the release state linearly every time it is operated). Meanwhile, the unlocking operation does not require a tool or a specialized or professional tool so that the cushion 91 is mounted and detached only by hand.

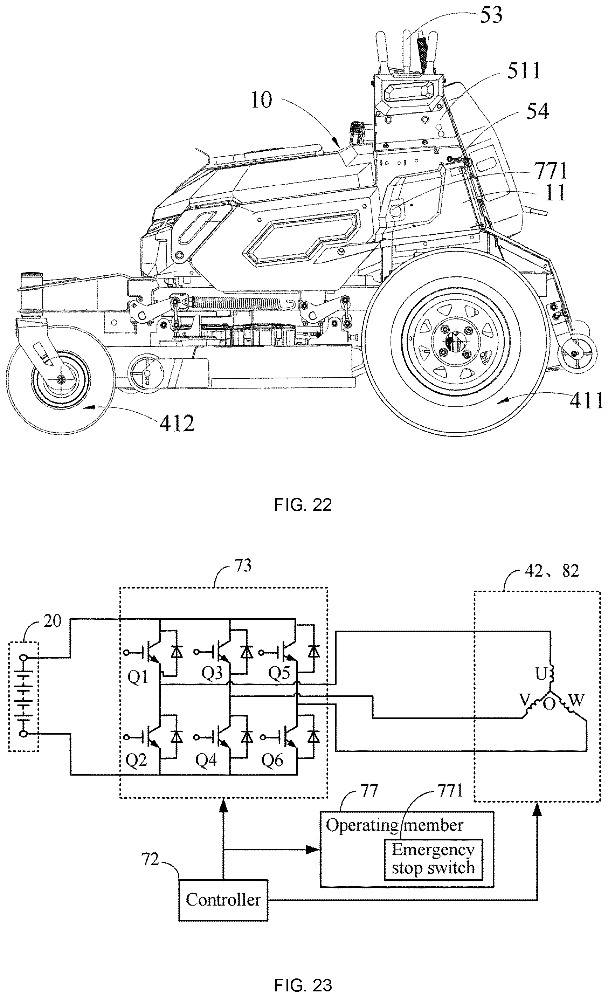

As shown in FIG. 23, the control assembly 70 controls at least operating states of the walking electric motor 42 and the mowing electric motor 82. The control assembly 70 includes a driver circuit 73 and a controller 72. For example, the controller 72 adopts a dedicated control chip, for example, a single-chip microcomputer or a microcontroller unit (MCU). Specifically, the controller 72 controls on or off states of switching elements in the driver circuit 73 through the control chip. For example, the driver circuit 73 includes power tubes (such as metal-oxide-semiconductor field-effect transistors (MOSFETs)). For example, the controller 72 is disposed on a control circuit board 71. The control circuit board 71 includes a printed circuit board (PCB) or a flexible printed circuit (FPC).

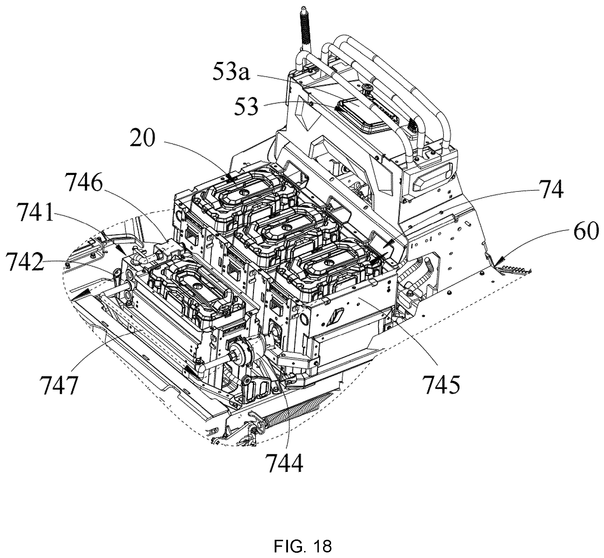

As shown in FIGS. 1 and 18, in this example, the control assembly 70 further includes an electric control box 74, and the electric control box 74 is provided with an accommodation portion configured to accommodate the control circuit board 71. The electric control box 74 is disposed between the power supply 20 and the standing platform 60. For example, the electric control box 74 is disposed above the standing platform 60 and on the rear side of the battery compartment 22. For example, the electric control box 74 is disposed in front of the cushion 91. When the control assembly 70 fails and requires inspection or maintenance, the cushion 91 is detached so that the control assembly 70 can be maintained, thereby improving the convenience of maintenance. Multiple electrical elements such as control chips and capacitors are disposed on the control circuit board 71 in the electric control box 74. During operation of the stand-on mower 100, a large amount of heat is generated. The overheating of the electrical elements causes a risk of damage of the elements in one aspect and causes the controller 72 to enter an overtemperature protection program in the other aspect, affecting the use of the product.

To ensure the heat dissipation of the control assembly 70, a heat dissipation assembly 741 is further included on the body portion 10. The heat dissipation assembly 741 includes a fan 742, an air pump 744, and a ventilation duct 745. The fan 742 is connected to the air pump 744 through a duct 747, an outlet of the air pump 744 is connected to an inlet of the ventilation duct 745, and an outlet of the ventilation duct 745 faces the electric control box 74, forming a heat dissipation air path from the fan 742 to the electric control box 74. In this example, the fan 742 and the air pump 744 are disposed on the left side and the right side of the power supply 20, respectively. For example, a moisture separator 746 is disposed upstream of the fan 742, and an outlet of the moisture separator 746 is connected to the fan 742. In this example, the fan 742 is disposed in a commutation portion, ensuring the heat dissipation of electronic elements in the electric control box 74.

As shown in FIGS. 18 to 22, the central control mechanism 50 includes a station 51 configured for the user to operate to control the stand-on mower 100. The station 51 is disposed above the foot pedal. An operating portion 52 is disposed on the station 51, the operating portion 52 includes a left drive rod 52L and a right drive rod 52R, and the operating portion 52 is configured for the operator to hold to control at least a walking direction and a walking speed of the stand-on mower 100. The walking direction of the stand-on mower 100 includes forward, backward, left turn, and right turn. In some examples, the controller 72 outputs control instructions based on actions on the drive rods, where the control instructions include an advance/retreat instruction, a turn instruction, and a zero-turn instruction.

In some examples, the operating portion 52 includes the left drive rod 52L and the right drive rod 52R. The left drive rod 52L and the right drive rod 52R are configured for the operator to hold with two hands to control at least the walking direction and the walking speed of the stand-on mower 100. The left drive rod 52L and the right drive rod 52R are movably connected to a station housing 511. To ensure that the left drive rod 52L and the right drive rod 52R have movement space, the station housing 511 is provided with trajectory through-holes 512 that match movement trajectories of the left drive rod 52L and the right drive rod 52R. To prevent foreign matters from entering the station 51 through the trajectory through-holes 512, protective portions 513 are added to the trajectory through-holes 512. For example, the protective portions 513 are protective meshes, protective covers, or other structures. The left drive rod 52L and the right drive rod 52R are symmetrically disposed. With the right drive rod 52R as an example, the right drive rod 52R is L-shaped and includes a vertical portion 522 and a horizontal portion 521, the vertical portion 522 is rotatably disposed on the station 51, and the horizontal portion 521 intersects an extension direction of the vertical portion 522. The horizontal portion 521 extends basically horizontally, and horizontal portions 521 of the left drive rod 52L and the right drive rod 52R extend towards each other. The two hands of the operator may hold the two horizontal portions 521 one to one to operate the left drive rod 52L and the right drive rod 52R. In some examples, the operator can control the stand-on mower 100 to advance by simultaneously rotating the left drive rod 52L and the right drive rod 52R forward, can control the stand-on mower 100 to retreat by simultaneously rotating the left drive rod 52L and the right drive rod 52R backward, can control the stand-on mower 100 to turn left by rotating only the left drive rod forward, and can control the stand-on mower 100 to turn right by rotating only the right drive rod forward. In some examples, the operator can control the walking speed of the stand-on mower 100 by adjusting an amplitude of rotation of the drive rod.

In some examples, the left drive rod 52L and the right drive rod 52R are further configured for the operator to operate to have at least a first position where the left drive rod 52L and the right drive rod 52R are opened outwards and a second position where the left drive rod 52L and the right drive rod 52R are closed inwards. The controller 72 is configured to allow a current to flow from the power supply 20 to the walking electric motor 42 when detecting at least a first signal and a second signal in sequence, where the first signal indicates that the left drive rod 52L and the right drive rod 52R switch from the second position to the first position, and the second signal indicates that the left drive rod 52L and the right drive rod 52R switch from the first position to the second position. In this manner, the purpose for safe startup is achieved, and the following problem is avoided: the operator unintentionally touches the drive rods to cause the stand-on mower 100 to walk suddenly.

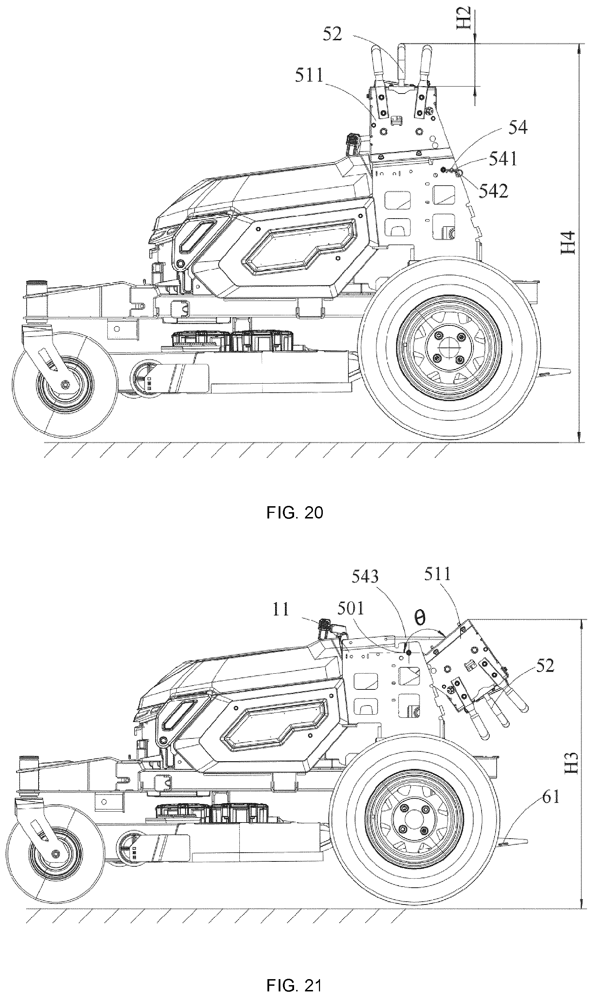

An operator interface is further disposed on the station 51, and the operator interface includes a display screen 53 with a display plane 53a. In some examples, a first plane is defined as basically parallel to a ground plane where the walking assembly 40 is located. In some examples, the left drive rod 52L and the right drive rod 52R are configured for the user to operate to have at least the first position where the left drive rod 52L and the right drive rod 52R are opened outwards and the second position where the left drive rod 52L and the right drive rod 52R are closed inwards on an opening and closing plane. In some examples, when the left drive rod 52L and the right drive rod 52R are at the second position, a projection of the left drive rod 52L and the right drive rod 52R on the first plane at least partially overlaps a projection of the display plane 53a on the first plane. The opening and closing plane is basically parallel or perpendicular to the display plane 53a. When the left drive rod 52L and the right drive rod 52R are at the first position, that is, when the drive rods are opened, the display screen 53 can be operated. In this manner, structures on the station 51 are more compact without affecting an operation on the display screen 53. In this example, as shown in FIG. 20, the distance H2 from the left drive rod 52L and the right drive rod 52R to an upper surface of the station 51 is greater than or equal to 130 mm, which may be understood as that the left drive rod 52L and the right drive rod 52R extend from the upper surface of the station 51 through the distance H2 greater than or equal to 130 mm. In one aspect, the comfort of holding of the user is ensured. In the other aspect, the user is prevented from touching other control components on the station 51 when operating the left drive rod 52L and the right drive rod 52R. In some examples, the distance H2 from the left drive rod 52L and the right drive rod 52R to the upper surface of the station 51 is greater than or equal to 135 mm. In some examples, the distance H2 from the left drive rod 52L and the right drive rod 52R to the upper surface of the station 51 is greater than or equal to 140 mm. In some examples, the distance H2 from the left drive rod 52L and the right drive rod 52R to the upper surface of the station 51 is equal to 145 mm.

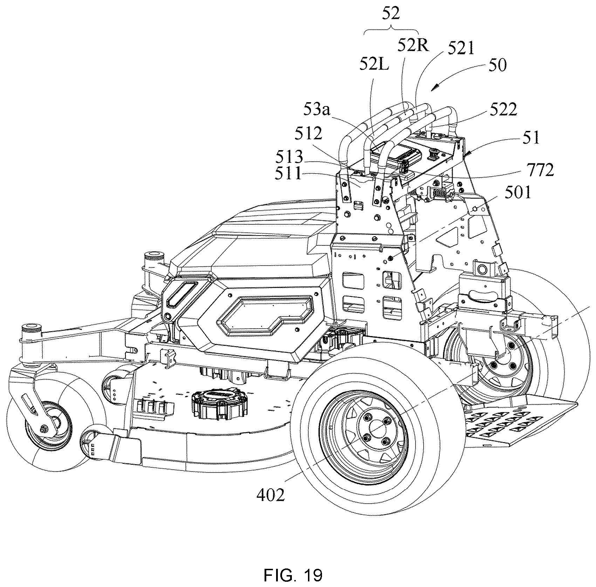

As shown in FIGS. 19 to 21, in this example, the station 51 is movably connected to the frame 11. The station 51 includes the station housing 511, and the operating portion 52 and the display screen 53 are separately disposed on the station housing 511. The station includes a first position and a second position. When the station 51 is at the first position and the second position, an upper edge of the station 51 has different heights from the ground plane where the walking assembly 40 is located. When the station is at the first position, the whole station extends along the up and down direction and is for use of the user. When the station is at the second position, the height from the upper edge of the station to the ground plane where the walking assembly is located is reduced. The height H3 from the upper edge of the station 51 to the ground plane where the walking assembly is located when the station is at the second position is less than the height H4 from the upper edge of the station 51 to the ground plane where the walking assembly is located when the station is at the first position. For example, when the station is at the first position, the station is in a working state, and the user stands on the foot pedal 61 and controls the walking assembly through the operating portion 52. When the station is at the second position, the station is in a stored state and cannot be operated by the user to control the walking assembly. In this example, the operating portion 52 extends out of the station housing. Therefore, in some examples, when the station 51 is in the working state, along the up and down direction, the height H4 from an upper edge of the operating portion 52 to the ground plane where the walking assembly 40 is located is greater than or equal to 1100 mm. In some examples, when the station 51 is in the working state, along the up and down direction, the height H4 from the upper edge of the operating portion 52 to the ground plane where the walking assembly 40 is located is greater than or equal to 1200 mm. In this example, when the station 51 is in the working state, along the up and down direction, the height H4 from the upper edge of the operating portion 52 to the ground plane where the walking assembly 40 is located is equal to 1220 mm. It may be understood as that when the station 51 is in the working state, the overall height H4 of the stand-on mower 100 is greater than or equal to 1100 mm. In this example, when the station 51 is in the working state, the overall height H4 of the stand-on mower 100 is equal to 1220 mm.

In this example, the station 51 is connected to the frame 11 through a station spindle 514, and the station 51 rotates relative to the frame 11 around a rotation axis. For ease of reference, the rotation axis of the station spindle 514 is a fourth axis 501. The station 51 rotates relative to the frame 11 around the fourth axis 501. The fourth axis 501 is parallel to the rear axis 402 of the drive wheels. When the station 51 switches between the first position and the second position, the station 51 rotates around the fourth axis 501, and the operating portion 52 and the display screen 53 rotate along with the station housing 511. As shown in FIGS. 19 and 21, when the station 51 is at the second position, that is, in the stored state, the station 51 is operated to rotate around the fourth axis 501 towards the foot pedal 61, and the operating portion 52 faces the foot pedal 61. For example, the station spindle 514 is disposed at the rear of the station housing 511. Therefore, when the station 51 is operated to the stored state, the whole station 51 is flipped to the rear of the frame 11, and the operating portion 52 is simultaneously flipped to face the foot pedal 61, thereby reducing the overall height of the stand-on mower 100. When the station 51 is in the stored state, the height H3 from a highest point of the stand-on mower 100 to the ground plane where the walking assembly 40 is located is less than or equal to 1000 mm. In this example, when the station 51 is in the stored state, the height H3 from the highest point of the stand-on mower 100 to the ground plane where the walking assembly 40 is located is equal to 950 mm. The station 51 is rotated so that the overall height of the stand-on mower 100 is reduced by more than 20%, which is beneficial for a loading rate of a container during transportation of the stand-on mower 100.

In some examples, the angle θ of rotation of the station 51 around the fourth axis 501 is greater than or equal to 90°. In some examples, the angle θ of rotation of the station 51 around the fourth axis 501 is greater than or equal to 100°. In some examples, the angle θ of rotation of the station 51 around the fourth axis 501 is greater than or equal to 110°. In some examples, the angle θ of rotation of the station 51 around the fourth axis 501 is greater than or equal to 120°. In some examples, the angle θ of rotation of the station 51 around the fourth axis 501 is greater than or equal to 130°. In some examples, the angle θ of rotation of the station 51 around the fourth axis 501 is greater than or equal to 140°. In this example, the angle θ of rotation of the station 51 around the fourth axis 501 is equal to 150°. When the station 51 is in the working state and the stored state, the station housing 511 is positioned and connected to the frame 11. For example, a locking member 54 is disposed between the station housing 511 and the frame 11. The locking member 54 is detachably connected to at least one of the station housing 511 and the frame 11. When the station 51 switches between the working state and the stored state, the locking member 54 is disengaged from at least one of the station housing 511 and the frame 11 so that the station housing 511 and the frame 11 are operated to move relatively. When the station 51 is in the working state or the stored state, the locking member 54 positions and connects the station housing 511 to the frame 11 so that the station housing 511 and the frame 11 cannot move relatively. This ensures that even when the station 51 is in the stored state, the station housing 511 and the frame 11 are fixed relative to each other, preventing the station from shaking during transportation. For example, the locking member 54 includes a pin shaft 541, and the station housing 511 and the frame 11 are correspondingly provided with positioning holes 542 that can accommodate the pin shaft 541. The station housing 511 and the frame 11 are separately provided with the positioning holes 542 corresponding to the working state and the stored state. In some examples, the station housing 511 and the frame 11 are provided with multiple positioning holes 542 so that the station housing 511 and the frame 11 can be positioned and connected at multiple angles.

In some examples, a boost member 543 is disposed between the station 51 and the frame 11 to assist in the flipping of the station 51 when the user flips the station 51. For example, the boost member 543 includes a hydraulic rod, a gas spring, a support rod, or the like. The boost member 543 also implements a buffering function, preventing the station 51 from colliding with the frame 11 during flipping.

As shown in FIGS. 22 and 23, the station 51 further includes multiple operating members 77, and the controller 72 is connected to the operating members 77. In this example, the multiple operating members 77 include an emergency stop switch 771. The controller 72 is configured to send a stop signal to the walking electric motor 42 and the mowing electric motor 82 when the emergency stop switch 771 is triggered. In this example, a storage module of the controller 72 includes at least two different control methods: an automatic mode and a manual mode. When the controller 72 is switched to the manual mode, the controller 72 outputs control instructions based on actions on the operating portion 52 to control the operating state of the walking electric motor 42. A running speed of the mowing electric motor 82 is controlled by a speed regulation module. When the controller 72 is switched to the automatic mode, the controller 72 no longer outputs the control instructions in response to the actions on the operating portion 52, and the controller 72 controls a speed of the walking electric motor 42 and a walking route of the walking assembly 40 based on preset parameters. The preset parameters include, but are not limited to, the following settings: the controller 72 stores multiple different operating modes with fixed parameters at the factory; and the user selects a mode but cannot modify a parameter in the mode; or the user may adjust a given parameter as required, where the parameter has multiple specified values, and the user cannot randomly define a value; or the user may randomly adjust a parameter value of a required type of parameter as required to satisfy the usage requirements of customers. It is to be understood that in the manual mode, the user needs to provide operation instructions at all times so that the stand-on mower 100 completes its work; and in the automatic mode, the user can simply observe without providing the operation instructions at all times to control the operation of the stand-on mower 100. However, if the stand-on mower 100 in the automatic mode enters an abnormal operating state that deviates from a specified operating state due to an external factor or a fault or abnormality of a device of the vehicle, the user needs to be able to quickly and urgently stop the travel and mowing of the stand-on mower 100 to ensure safety. In the present invention, the emergency stop switch 771 is disposed. When an abnormal state appears, the user actively triggers the emergency stop switch 771, the controller 72 sends a stop instruction to the walking electric motor 42 and the mowing electric motor 82, the walking electric motor 42 and/or the mowing electric motor 82 in operation quickly stop working in response to the stop instruction, and the walking electric motor 42 or the mowing electric motor 82 that is not in operation has no need to respond to the stop instruction, ensuring the safety of the stand-on mower 100 and the user.

In this example, when the emergency stop switch 771 is triggered, the controller 72 enters the manual mode, and the user takes over the operation and driving of the stand-on mower 100. In this manner, when the stand-on mower 100 is started again after an emergency stop, the user takes control of the stand-on mower by default and switches to the automatic mode as required after confirming that the fault or abnormality is removed.

In some examples, the emergency stop switch 771 is connected between the walking electric motor 42, the mowing electric motor 82, and a battery pack 21. When triggered, the emergency stop switch 771 disconnects electrical connections between the walking electric motor 42, the mowing electric motor 82, and the battery pack 21 so that the walking electric motor 42 and the mowing electric motor 82 lose power and stop.

In some examples, the emergency stop switch 771 is connected between the controller 72, the walking electric motor 42, and the mowing electric motor 82. Optionally, when the emergency stop switch 771 is triggered, the controller 72 sends a quick brake signal to the walking electric motor 42 and the mowing electric motor 82, and the walking electric motor 42 and the mowing electric motor 82 perform short-circuit braking or reverse torque braking in response to the quick brake signal.

As shown in FIG. 22, the emergency stop switch 771 is disposed on the left side of the body portion 10. Optionally, the emergency stop switch 771 is disposed on the left side surface of the station housing 511. Optionally, the emergency stop switch 771 is disposed on the left side of the upper side surface of the station housing 511. Optionally, the emergency stop switch 771 is disposed on the left side surface of the frame 11 so that the user does not accidentally operate the emergency stop switch during normal travel and can consciously touch the emergency stop switch as required. In some examples, the emergency stop switch 771 is a button. In some examples, the emergency stop switch 771 is a knob. In some examples, the emergency stop switch 771 is a toggle. In some examples, the emergency stop switch 771, once operated and triggered, cannot automatically reset.

In this example, the multiple operating members 77 include a startup switch 772, and when the startup switch 772 is activated, electrical components of the stand-on mower are powered on or start operating. Optionally, the startup switch 772 is a physical switch such as a button, knob, toggle, or key. Optionally, the startup switch 772 may be an electronic switch with an electronic recognition function, for example, a contact-based electronic switch with password recognition, chip recognition, negative temperature coefficient (NTC) recognition, or biometric recognition such as facial recognition or fingerprint recognition. Optionally, the startup switch 772 is an electronic switch, where an instruction for triggering the electronic switch is sent to the startup switch 772 in a non-contact signal transmission manner such as the Internet of things (IoT), Bluetooth, or remote control. In this example, the stand-on mower 100 includes at least two forms of startup switches 772, optionally including the physical switch and the electronic switch with the electronic recognition function or optionally including the physical switch and the electronic switch in the non-contact signal transmission manner. Optionally, the above three types of switches are included.

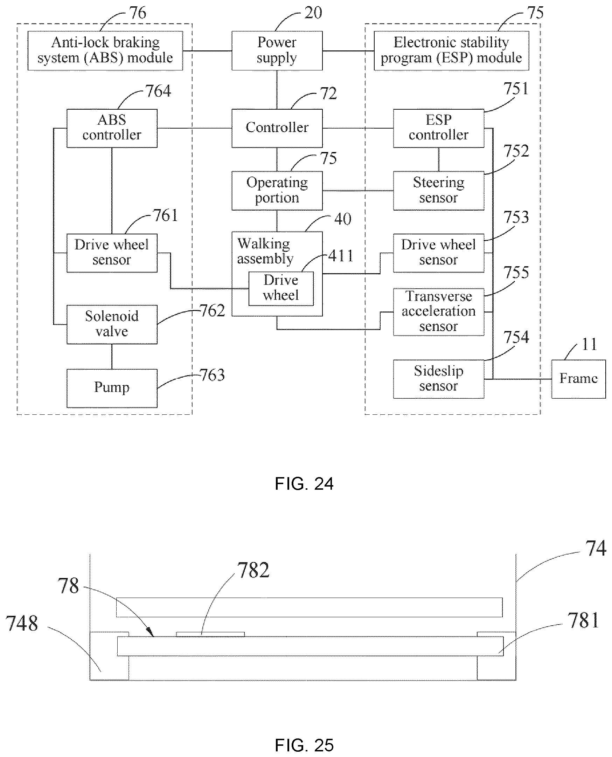

As shown in FIG. 24, in this example, the control assembly 70 further includes an electronic stability program (ESP) module 75 and an anti-lock braking system (ABS) module 76. The ESP module 75 includes an ESP controller 751, a steering sensor 752 (for monitoring an operating mode of the operating portion), a drive wheel sensor 753 (for monitoring the rotational speed of each drive wheel), a sideslip sensor 754 (for monitoring a state of the frame 11 rotating about a vertical axis), and a transverse acceleration sensor 755 (for monitoring a centrifugal force of the walking assembly 40 during a turn). The ESP controller 751 and the controller 72 are in the form of dual controllers (for example, dual MCUs). Optionally, the ESP controller 751 and the controller 72 are disposed on the same control circuit board 71. In some examples, the ESP controller 751 and the controller 72 are separately disposed on two different circuit boards. The ABS module 76 mainly includes a drive wheel sensor 761 (for monitoring the rotational speed of each drive wheel), a solenoid valve 762 (for blocking a pipeline and releasing part of pressure of the braking system), a pump 763 (for restoring the pressure while the solenoid valve reduces the pressure in the pipeline), and an ABS controller 764. In some examples, the ABS controller 764, the ESP controller 751, and the controller 72 adopt different MCUs. Optionally, the ABS controller 764, the ESP controller 751, and the controller 72 are disposed on the same control circuit board 71. Optionally, any two of the ABS controller 764, the ESP controller 751, and the controller 72 are disposed on the same control circuit board 71, and the remaining one is separately disposed on one control circuit board 71. Optionally, the ABS controller 764, the ESP controller 751, and the controller 72 are separately disposed on three control circuit boards 71, that is, the ABS controller 764, the ESP controller 751, and the controller 72 are each provided with a separate circuit board.

In this example, the control assembly 70 further includes an energy management system (EMS) 78 for monitoring, controlling, and optimizing the energy flow and energy consumption of the power supply 20 in the electrical components.

As shown in FIG. 25, the energy management system 78 includes a power management board 781 where an energy management controller 782 is disposed. Optionally, the power management board 781 is electrically connected to the power supply 20 and includes at least one energy management controller 782 configured to control a charging or discharging process of multiple battery packs 21 in the power supply 20. The energy management controller 782 adopts a dedicated control chip, for example, a single-chip microcomputer or an MCU.

In this example, the controller 72 and the energy management controller 782 are both disposed in the electric control box 74. The controller 72 is configured to include a first control module for controlling the walking electric motor 42 and a second control module for controlling the mowing electric motor 82, where the first control module and the second control module may be integrated into one control chip or separately disposed on multiple control chips. The controller 72 and the energy management controller 782 may be integrated onto the same control circuit board 71 or separately disposed on different control circuit boards 71. However, all control circuit boards 71 are disposed in the electric control box 74, which are integrated to facilitate maintenance, save space, and share the heat dissipation structure.

In some examples, shock-absorbing devices 748 are disposed at connections between the electric control box 74, the power management board 781, and the frame 11 and configured to reduce vibration loads of connectors and internal elements. Optionally, the shock-absorbing devices include shock-absorbing rubber, silica gel, or other elastic shock-absorbing components.

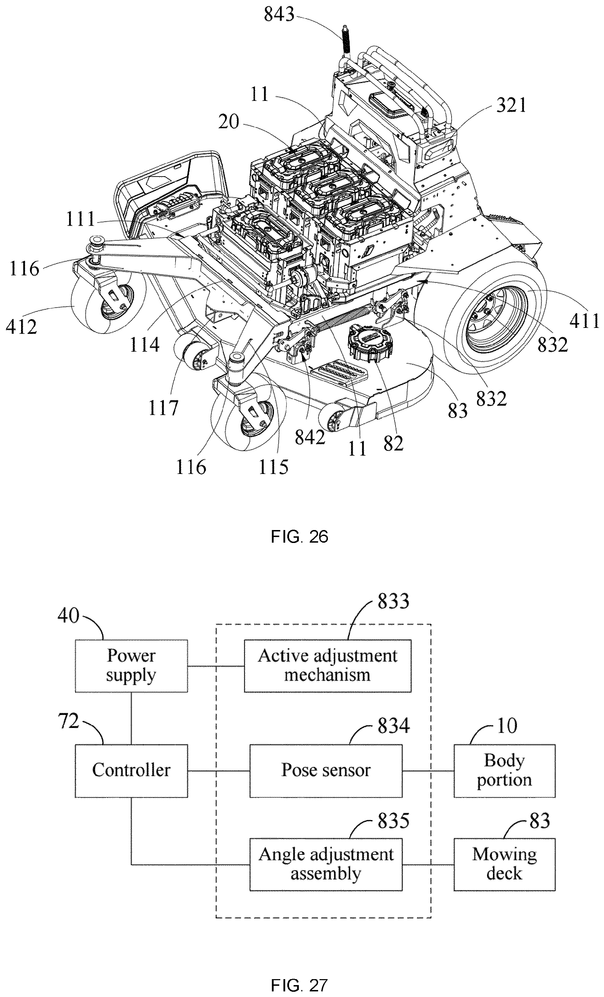

As shown in FIGS. 26 to 28, the body portion 10 further includes a height adjustment device 841 configured to adjust the distance between the whole cutting assembly 80 and the ground and a locking device 842 configured to lock the distance between the whole cutting assembly 80 and the ground. To be convenient for the worker standing on the mower to adjust the height of the cutting assembly 80, the mower is provided with an adjustment handle 843 extending out of the frame 11. The adjustment handle 843 is movably connected to the frame 11, the height of the adjustment handle 843 is greater than or equal to the height of the operating portion 52, and the adjustment handle 843 is disposed on the right side of the body portion 10 so that the user standing on the standing platform 60 can still operate the adjustment handle 843 to drive the height adjustment device 841 to adjust the height of the cutting assembly 80 and can operate the adjustment handle 843 to drive the locking device 842 to lock the height of the cutting assembly 80. In some examples, the adjustment handle 843 is detachably connected to the frame 11. For example, the handle has multiple mounting positions on the frame 11, and different mounting positions enable the handle to be mounted at different angles or heights relative to the frame 11 to adapt to the heights and operation habits of users. When the station 51 is in the stored state, the adjustment handle 843 is detached and stored to reduce packaging space. In some examples, the adjustment handle is configured to be a retractable or foldable structure. When the station 51 is in the stored state, the adjustment handle 843 is folded or retracted to reduce a size and the packaging space.

The cutting assembly 80 includes a mowing deck 83, the mowing deck 83 has a cutting chamber 831 facing downwards, and the cutting chamber 831 is configured for the mowing blade. The mowing electric motor 82 is mounted on the mowing deck 83. The mowing electric motor 82 partially extends out of the cutting chamber 831. Optionally, the mowing electric motor 82 is partially located above the mowing deck 83. The mowing deck 83 is connected to the frame 11 and the height adjustment device 841. Optionally, the mowing deck 83 is provided with a hooking structure 832. The mowing deck 83 is provided with multiple hooking structures 832, where the multiple hooking structures 832 are the same so that the mowing deck 83 is mounted with the same fastening structures and is convenient to mount. In this example, when the mowing deck 83 is connected to the frame 11 and the height adjustment device 841, six fasteners are required. Optionally, the fasteners are bolts.

In some examples, an active adjustment mechanism 833 is further included. The active adjustment mechanism 833 includes a pose sensor 834 on the body portion 10 and an angle adjustment assembly 835 for the mowing deck 83. The pose sensor 834 is configured to detect a real-time pose of the body portion 10, and the pose sensor 834 is disposed on the frame 11. Optionally, the pose sensor 834 includes a three-axis gyroscope, a three-axis accelerometer, a three-axis electronic compass, or another motion sensor. The angle adjustment assembly 835 for the mowing deck 83 is connected to the mowing deck 83. The pose sensor 834 detects the real-time pose of the frame 11 and sends pose information in the form of a signal to the controller 72. According to the pose information, the controller 72 determines bumps and shakes of the vehicle body due to ground pits or stones. When determining the bumps and shakes of the vehicle body, the controller 72 sends a signal of corresponding angle adjustment information to the angle adjustment assembly 835 for the mowing deck 83. The angle adjustment assembly 835 for the mowing deck 83 adjusts the angle or shake degree of the mowing deck 83 according to control information to filter all the bumps or reduce an amplitude of the bumps, ensuring smoothness in cutting quality.

As shown in FIGS. 3 and 26, the frame 11 includes a front frame 111 and a rear frame 112. The front walking wheels 412 are mounted to the front frame 111, and the rear walking wheels 411 are mounted to the rear frame 112. Different working environments require different cutting assemblies 80, and cutting assemblies 80 of different specifications such as 48 inches and 50 inches require different assembly spaces. The front frame 111 and the rear frame 112 are detachably connected so that the wheelbase of the mower is adjustable, so as to achieve different bottom assembly spaces and satisfy the requirement for adapting to different cutting assemblies 80.

The front frame 111 is U-shaped and includes a second crossbeam 114. First connecting portions 115 extending forward are disposed at two ends of the second crossbeam 114, and two first connecting portions 115 are each equipped with the front walking wheel 412. The front walking wheel 412 is preferably an omni wheel as a steering wheel. In an example, an assembly tube 116 is provided at the front end of a first connecting portion 115, a first bearing is mounted in the assembly tube 116, the first bearing is in an interference fit with a first rotating shaft, the lower end of the first rotating shaft extends out of the assembly tube 116 and is connected to a front fork, and the front walking wheel 412 is rotatably connected to the front fork. A wheel protection plate is provided on the front fork, and the front end of the wheel protection plate extends beyond the front walking wheel 412. In the event of a collision, the wheel protection plate collides with an obstacle prior to the front walking wheel 412 so that a tire of the front walking wheel 412 can be prevented from colliding with the obstacle, and especially when the obstacle is hard, the tire of the front walking wheel 412 can be prevented from damage, improving a service life of the front walking wheel 412. Preferably, the wheel protection plate is inclined towards the front of the mower from top to bottom. Compared with a vertical wheel protection plate, the inclined wheel protection plate has an improved anti-collision capability so that the wheel protection plate and the front walking wheel 412 are less damaged in the event of the collision.

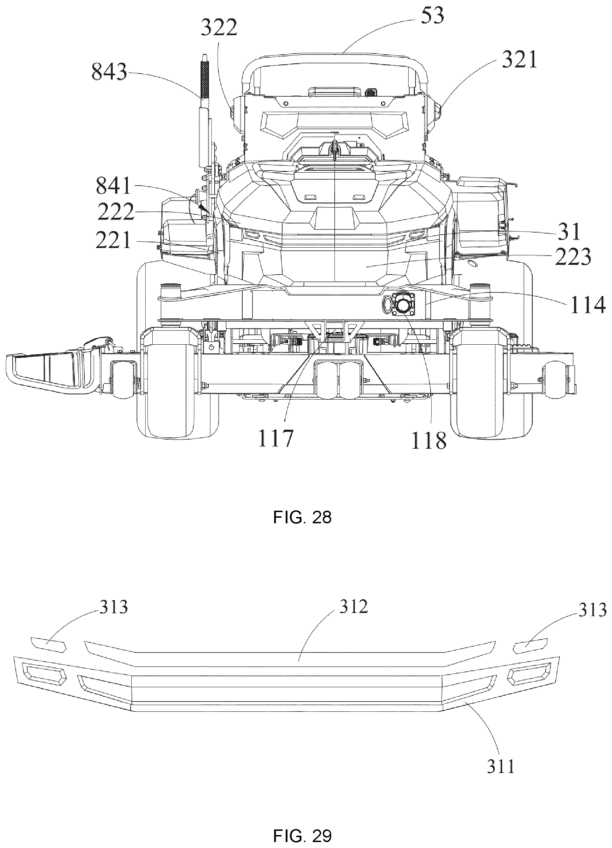

As shown in FIGS. 26 and 28, a mechanical interface 117 for externally connecting another apparatus is disposed on the front frame 111, where the other apparatus includes a garden tool such as a grass trimmer, a blower, a walk-behind power tool such as a mower, a chainsaw, or a cleaning machine. Alternatively, the power tool may be a decoration tool such as a screwdriver/drill/wrench, an electric hammer, a nail gun, or a sander. Alternatively, the power tool may be a sawing tool such as a reciprocating saw, a jigsaw, or a circular saw. Alternatively, the power tool may be a grinding tool such as an angle grinder or the sander. Alternatively, the power tool may be another power tool such as a fan. The other apparatus is connected to the stand-on mower 100 through the mechanical interface 117.

An electrical connection interface 118 is further disposed on the front frame 111, such as an ETO electrical connection interface. Another apparatus acquires power from the power supply 20 through the electrical connection interface 118 to power a drive structure in the other apparatus. The electrical connection interface 118 is configured with a corresponding interface controller 72 and hardware. The interface controller 72 is communicatively connected to the controller 72, and the other apparatus not only acquires power from the power supply 20 through the electrical connection interface 118 but also communicates with the controller 72 through the electrical connection interface 118. In this example, an interactive interface is also configured near the electrical connection interface 118 to acquire an instruction from the user and feed back a working state.

In some examples, the mechanical interface 117 and the electrical connection interface 118 are disposed on the front side of the front frame 111 and on the second crossbeam 114. In some examples, the mechanical interface 117 and the electrical connection interface 118 are disposed on the left side or the right side of the front frame 111. In some examples, the mechanical interface 117 and the electrical connection interface 118 are separately disposed on the front side, left side, or right side of the front frame 111.

As shown in FIGS. 26, 28, and 2, lights are disposed at multiple positions of the body portion 10, for example, tail lights and turn signals are disposed at the rear, and front lights are disposed in the front. In one aspect, the lights can implement an illumination function, making it convenient for the worker to perform mowing under poor illumination and satisfying requirements in different usage scenarios. In the other aspect, different flashing frequencies and different colors of the lights can convey various signals, facilitating communication between workers and transmission of indications.

In this example, a front illumination assembly 31 is disposed above the front frame 111. For example, the battery compartment 22 is disposed on the front frame 111, and the battery compartment 22 includes a compartment body 221 with an accommodation space and a compartment cover 222 that can be opened and closed. The front illumination assembly 31 is disposed on the front side surface of the compartment body 221. In some examples, the front illumination assembly 31 is disposed on a side surface of the compartment cover 222. In the front and rear direction, the front illumination assembly 31 is located on the rear side of the front frame 111, so as to prevent the front illumination assembly 31 from a collision. In the up and down direction, the distance between the center of the front illumination assembly 31 and the ground is greater than or equal to 550 mm and less than or equal to 700 mm. In some examples, the distance between the center of the front illumination assembly 31 and the ground is greater than or equal to 600 mm and less than or equal to 650 mm. In this example, the distance between the center of the front illumination assembly 31 and the ground is 630 mm.

The front illumination assembly 31 extends along the left and right direction and is disposed on the front side of an electric mower, and light emitted by the front illumination assembly 31 can change the forward vision of the electric mower. The front illumination assembly has a substantially U-shaped structure and is disposed below the compartment cover 222. In this example, a front face 223 is disposed in front of the compartment body 221 of the battery compartment 22, and the front illumination assembly 31 is fixedly connected to the front face 223. The front illumination assembly 31 includes a first housing 311, a running light 312, and illumination lights 313. The first housing 311 supports the running light 312 and the illumination lights 313, and the first housing 311 connects the front illumination assembly 31 to the front face 223 through fasteners. The running light 312 includes light beads or a light plate. For example, the running light 312 includes light-emitting diode (LED) light beads or chip on board (COB) light beads. An illumination light 313 includes light beads or a light plate. For example, the illumination light 313 includes LED light beads or COB light beads. A light area in an illumination range of the front illumination assembly has a length of 5 m and a width of 4 m.

In this example, a left warning light 321 and a right warning light 322 are disposed on the left side and the right side of the station 51, respectively. The left warning light 321 and the right warning light 322 are separately disposed on the station housing 511. For example, the left warning light 321 and the right warning light 322 are located below a left drive rod 52L and a right drive rod 52R. For example, the left warning light 321 and the right warning light 322 are separately located above the compartment cover 222 of the battery compartment 22 and behind the battery compartment 22. For example, the left warning light 321 and the right warning light 322 are basically flush with the uppermost side of the cushion 91 in the up and down direction. In this example, the left warning light 321 and the right warning light 322 each include a light bead 323 and a cover 324, and the cover 324 includes two colors: red and yellow. When the light bead is on, the cover 324 displays different colors.

When the user triggers the startup switch 772, the running light 312 can be turned on. For example, multiple light beads included in the running light 312, which are arranged at intervals in the left and right direction, can be turned on in a water flowing pattern to represent the startup of the whole machine. For example, the multiple light beads are turned on in sequence for a target duration and then turned off in sequence from left to right or from right to left to form a flowing light pattern that can represent the startup of the whole machine. It is to be noted that before the former light bead is turned off, the latter light bead is already turned on, that is, the number of light beads simultaneously on is greater than or equal to 2.

When the walking assembly 40 starts traveling, the running light 312 switches to an always on state of all or some light beads to improve the vision of the user.

In some examples, during operation of the mowing electric motor 82, the front illumination assembly 31 can indicate a grass discharge direction when the mowing electric motor 82 is working. For example, the multiple light beads included in the running light 312, which are arranged at intervals in the left and right direction, can be turned off in a water flowing pattern from left to right or from right to left to indicate the grass discharge direction. Specifically, the multiple light beads that are all on are turned off in sequence from left to right or from right to left to form a flowing off effect that can indicate the grass discharge direction. In another example, at least part of the light beads, which are arranged in a pattern that can indicate the grass discharge direction, can be turned on simultaneously to indicate the grass discharge direction.

In some examples, the light beads in the running light 312 can emit breathing light to represent being charged. Specifically, the light beads are turned on a target number of times at a target frequency, which are on for a first target duration and then continue to be on for a second target duration alternately, where the second target duration is longer than the first target duration. It is to be noted that compared with fast flashing light, the breathing light flashes at a relatively low frequency. The running light 312 switches to the always on state of all or some light beads to represent charging completion.

In some examples, the multiple light beads included in the running light 312, which are arranged at intervals in the left and right direction, can be turned off in a water flowing pattern from outside in to represent the shutdown of the whole machine. Specifically, the multiple light beads that are all on are turned off in sequence from the outermost side to the innermost side to form a flowing light pattern that can represent the shutdown of the whole machine. In some other examples, the multiple light beads that are all on are turned off in sequence from the innermost side to the outermost side to form a flowing light pattern that can represent the shutdown of the whole machine. Of course, the multiple light beads may be arranged in multiple rows and multiple columns, arranged radially, or arranged in concentric rings. The light beads that are all on are turned off radially from inside out or from outside in.

In some examples, the illumination lights 313 are not automatically and simultaneously turned on when the whole machine starts. When the user needs to turn on the illumination lights 313, the user operates the startup switch 772 for the illumination lights 313, and the illumination lights 313 gradually brighten. When the user turns off the illumination lights 313, the user operates the startup switch 772 for the illumination lights 313 again, and the illumination lights 313 are directly off.

In some examples, when the user triggers the startup switch 772, the left warning light 321 and the right warning light 322 can be turned on. For example, the left warning light 321 and the right warning light 322 gradually brighten in a brightness increase form. When the walking assembly 40 starts traveling, the running light 312 switches to the always on state of all or some light beads.

In some examples, light beads of the left warning light 321 and the right warning light 322 can emit fast flashing light to represent alarm information or error information. Specifically, the light beads are turned on a target number of times at a target frequency, which are on for a target duration every time, so as to form flashing light that can represent the alarm information or the error information. It is to be noted that one light bead may flash fast or multiple light beads may simultaneously flash fast, where each light bead flashes at a relatively high frequency and is on for a relatively short duration every time. The alarm information or the error information includes the walking assembly 40, the cutting assembly 80, or the control assembly 70.

In some examples, the light beads of the left warning light 321 and the right warning light 322 can emit breathing light to represent being charged. Specifically, the light beads are turned on a target number of times at a target frequency, which are on for a first target duration and then continue to be on for a second target duration alternately, where the second target duration is longer than the first target duration. It is to be noted that compared with fast flashing light, the breathing light flashes at a relatively low frequency. The left warning light 321 and the right warning light 322 switch to the always on state of all or some light beads to represent charging completion.

In some examples, the light beads of the left warning light 321 and the right warning light 322 gradually decrease in brightness to represent the shutdown of the whole machine. That is to say, the left warning light 321 and the right warning light 322 gradually dim when the whole machine shuts down.

In some examples, a rear illumination assembly may be further included, which is disposed on two sides of the cushion 91. In some examples, the left warning light 321 and the right warning light 322 may be placed at any positions on the left side and the right side of the body portion 10.

In some examples, one battery compartment 22 is provided, and the multiple battery packs 21 are disposed in the one battery compartment 22. In some examples, the number of battery compartments 22 is the same as the number of battery packs 21, and each battery pack 21 is disposed in its corresponding battery compartment 22. Optionally, multiple battery compartments 22 and multiple battery packs 21 are provided, and two or more battery packs 21 are disposed in at least one of the multiple battery compartments 22. In some examples, the battery compartment 22 is further provided with an input terminal configured to transmit an electrical signal or a communication signal. In some examples, the battery compartment 22 is further provided with a locking structure configured to lock the battery pack 21 into the battery compartment 22, preventing poor contact between the battery pack 21 and the battery compartment 22 that affects the normal operation of the vehicle.

In some examples, the battery compartment 22 is provided with a socket, and the battery pack 21 includes a plug that mates with the socket. After the battery pack 21 is placed in the battery compartment 22, the plug is inserted into the socket to achieve an electrical connection between the battery pack 21 and the battery compartment 22. In some examples, multiple through holes are provided on a surface of the battery compartment 22, reducing the weight of the battery compartment 22 while the strength of the battery compartment 22 is ensured, so that the whole machine is reduced in weight, and the heat dissipation efficiency of the battery pack 21 can be improved.

In some examples, the compartment body 221 of the battery compartment 22 is provided with an opening for a battery to enter and exit, the compartment cover 222 selectively covers an opening portion of the compartment body 221, at least one of the compartment body 221 and the compartment cover 222 is provided with a first latch, and the first latch is operated to secure the compartment cover 222 to the compartment body 221. For example, the compartment cover 222 may be completely separated from the compartment body 221.

In some examples, at least one of the compartment body 221 and the compartment cover 222 is provided with the first latch, and the first latch is operated to secure the compartment cover 222 to the compartment body 221. The compartment cover 222 is slidably connected to the compartment body 221.

As shown in FIG. 1, in some examples, the stand-on mower 100 is provided with a mower charging interface 773, and the battery pack 21 is charged by a charging gun. A related mower charging interface 773 is generally disposed horizontally. Due to a height limitation of the mower, it is inconvenient for the worker to apply a force to plug and remove the charging gun horizontally, resulting in relatively difficult plugging and removal. In an example of the present invention, the charging interface 773 is disposed at the rear of the mower, and the angle between the charging interface 773 and the horizontal plane is 60° to 75°. The charging interface 773 is inclined upwards, making it more convenient for the worker to apply a force to plug and remove the charging gun, thus facilitating plugging and removal. In an example, a flippable charging interface cover 774 is provided at the charging interface 773. During charging, the charging interface cover is opened. After charging completion, the charging interface cover is automatically closed, preventing rainwater, debris, and so on from falling into the charging interface 773 and reducing a fault rate. It is to be noted that a manner for automatically closing the charging interface cover is selected from the existing art according to actual situations, which is not limited in the present invention.

The basic principles, main features, and advantages of the present invention are shown and described above. It is to be understood by those skilled in the art that the preceding examples do not limit the present invention.

## Claims

1. A stand-on mower (100), comprising:
a body portion (10) comprising a frame (11);
a foot pedal (61) used for a user to stand on and disposed at a rear end of the body portion;
a walking assembly (40) supporting the body portion and configured to drive the stand-on mower to walk, wherein the walking assembly comprises at least two drive wheels **(411L,** 411R) and at least two walking electric motors (42), and the at least two walking electric motors drive the at least two drive wheels one to one;
a cutting assembly (80) comprising a mowing element for mowing grass and mounted to the frame; and
a power supply (20) configured to power the walking assembly to enable the at least two drive wheels to output torque to drive the stand-on mower to walk and further configured to power the cutting assembly to enable the mowing element to cut vegetation; wherein
the walking assembly comprises rear walking wheels (411) and front walking wheels (412), the rear walking wheels comprise the at least two drive wheels, the at least two drive wheels rotate around a rear axis (402), the front walking wheels rotate around a front axis (403), and a distance between the front axis and the rear axis is a wheelbase of the stand-on mower; **characterized in that**
a ratio of maximum output torque of a single drive wheel of the at least two drive wheels to an unladen weight of the stand-on mower is greater than or equal to 1.2 N·m/kg; and
when the stand-on mower is unloaded, a ratio of a distance between an overall center of gravity M of the stand-on mower and the rear axis to the wheelbase of the stand-on mower is greater than or equal to 0.25 and less than or equal to 0.35.

2. The stand-on mower according to claim 1, wherein the at least two drive wheels comprise a left drive wheel and a right drive wheel, and the left drive wheel and the right drive wheel are driven by a first walking electric motor and a second walking electric motor, respectively.

3. The stand-on mower according to claim 2, further comprising a transmission assembly (45) configured to convert or transmit torque of the at least two walking electric motors to the at least two drive wheels.

4. The stand-on mower according to claim 1, wherein a ratio of rated output power of the walking assembly to the unladen weight of the stand-on mower is greater than or equal to 7 W/kg.

5. The stand-on mower according to claim 1, wherein a ratio of maximum output power of the single drive wheel to the unladen weight of the stand-on mower is greater than or equal to 8.7 W/kg.

6. The stand-on mower according to claim 1, wherein the power supply comprises a plurality of battery packs (21), and at least one of the plurality of battery packs is detachably mounted to a coupling portion (83) of the stand-on mower.

7. The stand-on mower according to claim 6, wherein the unladen weight of the stand-on mower is defined as an overall weight of the stand-on mower when all battery packs accommodable in the coupling portion of the stand-on mower are mounted and the user is not carried.

8. The stand-on mower according to claim 1, wherein when the stand-on mower is in a manned state wherein a user having a weight of 90 kg is standing on the standing platform (90), a ratio of a distance between an overall center of gravity M of the stand-on mower and the rear axis to the wheelbase of the stand-on mower is greater than or equal to 0.2 and less than or equal to 0.3.

9. The stand-on mower according to claim 1, wherein when the stand-on mower is in a manned state wherein a user having a weight of 90 kg is standing on the standing platform (90), a weight distribution of the front walking wheels accounts for 24% to 27% of an overall weight of the stand-on mower.

10. The stand-on mower according to claim 1, wherein when the stand-on mower is in a manned state wherein a user having a weight of 90 kg is standing on the standing platform (90), a weight distribution of the front walking wheels accounts for 20% to 30% of an overall weight of the stand-on mower.

11. The stand-on mower according to claim 1, wherein output torque of the single drive wheel is greater than 366 N·m.

12. The stand-on mower according to claim 1, wherein specifications of the at least two drive wheels comprise 23×10.5-12.

13. The stand-on mower according to claim 1, wherein when the stand-on mower is on a slope inclined at an angle of 20° or less, a straight travel capability of the stand-on mower in a slope width direction reaches a deviation of 3 meters or less within 50 meters.

## Patentansprüche

1. Rasenmäher mit Stehplattform (100), umfassend:
einen Körperabschnitt (10), der einen Rahmen (11) umfasst;
ein Fußpedal (61), auf dem ein Benutzer stehen kann und das an einem hinteren Ende des Körperabschnitts angeordnet ist;
eine Fahrbaugruppe (40), die den Körperabschnitt trägt und dazu eingerichtet ist, den Rasenmäher mit Stehplattform zur Fortbewegung anzutreiben, wobei die Fahrbaugruppe mindestens zwei Antriebsräder (411L, 411R) und mindestens zwei Fahrelektromotoren (42) umfasst und die mindestens zwei Fahrelektromotoren die mindestens zwei Antriebsräder in einer Eins-zu-eins-Zuordnung antreiben;
eine Schneidbaugruppe (80), die ein Mähelement zum Mähen von Gras umfasst und an dem Rahmen montiert ist; und
eine Stromversorgung (20), die dazu eingerichtet ist, die Fahrbaugruppe mit Strom zu versorgen, damit die mindestens zwei Antriebsräder ein Drehmoment abgeben können, um den Rasenmäher mit Stehplattform zur Fortbewegung anzutreiben, und ferner dazu eingerichtet ist, die Schneidbaugruppe mit Strom zu versorgen, damit das Mähelement Vegetation schneiden kann; wobei
die Fahrbaugruppe hintere Laufräder (411) und vordere Laufräder (412) umfasst, die hinteren Laufräder die mindestens zwei Antriebsräder umfassen, die mindestens zwei Antriebsräder um eine hintere Achse (402) rotieren, die vorderen Laufräder um eine vordere Achse (403) rotieren und ein Abstand zwischen der vorderen Achse und der hinteren Achse ein Radstand des Rasenmähers mit Stehplattform ist; **dadurch gekennzeichnet, dass**
ein Verhältnis eines maximalen Abtriebsdrehmoments eines einzelnen Antriebsrads der mindestens zwei Antriebsräder zu einem Leergewicht des Rasenmähers mit Stehplattform größer als oder gleich 1,2 N·m/kg ist; und
wenn der Rasenmäher mit Stehplattform unbeladen ist, ein Verhältnis eines Abstands zwischen einem Gesamtschwerpunkt M des Rasenmähers mit Stehplattform und der hinteren Achse zum Radstand des Rasenmähers mit Stehplattform größer als oder gleich 0,25 und kleiner als oder gleich 0,35 ist.

2. Rasenmäher mit Stehplattform nach Anspruch 1, wobei die mindestens zwei Antriebsräder ein linkes Antriebsrad und ein rechtes Antriebsrad umfassen und das linke Antriebsrad und das rechte Antriebsrad durch einen ersten Fahrelektromotor beziehungsweise einen zweiten Fahrelektromotor angetrieben werden.

3. Rasenmäher mit Stehplattform nach Anspruch 2, ferner umfassend eine Übertragungsbaugruppe (45), die dazu eingerichtet ist, ein Drehmoment der mindestens zwei Fahrelektromotoren umzuwandeln oder auf die mindestens zwei Antriebsräder zu übertragen.

4. Rasenmäher mit Stehplattform nach Anspruch 1, wobei ein Verhältnis einer Nennabgabeleistung der Fahrbaugruppe zum Leergewicht des Rasenmähers mit Stehplattform größer als oder gleich 7 W/kg ist.

5. Rasenmäher mit Stehplattform nach Anspruch 1, wobei ein Verhältnis einer maximalen Abgabeleistung des einzelnen Antriebsrads zum Leergewicht des Rasenmähers mit Stehplattform größer als oder gleich 8,7 W/kg ist.

6. Rasenmäher mit Stehplattform nach Anspruch 1, wobei die Stromversorgung mehrere Batteriepacks (21) umfasst und mindestens eines der mehreren Batteriepacks abnehmbar an einem Kopplungsabschnitt (83) des Rasenmähers mit Stehplattform montiert ist.

7. Rasenmäher mit Stehplattform nach Anspruch 6, wobei das Leergewicht des Rasenmähers mit Stehplattform als ein Gesamtgewicht des Rasenmähers mit Stehplattform definiert ist, wenn alle in dem Kopplungsabschnitt des Rasenmähers mit Stehplattform aufnehmbaren Batteriepacks montiert sind und der Benutzer nicht mitgeführt wird.

8. Rasenmäher mit Stehplattform nach Anspruch 1, wobei, wenn sich der Rasenmäher mit Stehplattform in einem bemannten Zustand befindet, in dem ein Benutzer mit einem Gewicht von 90 kg auf der Stehplattform (90) steht, ein Verhältnis eines Abstands zwischen einem Gesamtschwerpunkt M des Rasenmähers mit Stehplattform und der hinteren Achse zum Radstand des Rasenmähers mit Stehplattform größer als oder gleich 0,2 und kleiner als oder gleich 0,3 ist.

9. Rasenmäher mit Stehplattform nach Anspruch 1, wobei, wenn sich der Rasenmäher mit Stehplattform in einem bemannten Zustand befindet, in dem ein Benutzer mit einem Gewicht von 90 kg auf der Stehplattform (90) steht, ein auf die vorderen Laufräder entfallender Gewichtsanteil 24 % bis 27 % eines Gesamtgewichts des Rasenmähers mit Stehplattform ausmacht.

10. Rasenmäher mit Stehplattform nach Anspruch 1, wobei, wenn sich der Rasenmäher mit Stehplattform in einem bemannten Zustand befindet, in dem ein Benutzer mit einem Gewicht von 90 kg auf der Stehplattform (90) steht, ein auf die vorderen Laufräder entfallender Gewichtsanteil 20 % bis 30 % eines Gesamtgewichts des Rasenmähers mit Stehplattform ausmacht.

11. Rasenmäher mit Stehplattform nach Anspruch 1, wobei ein Abtriebsdrehmoment des einzelnen Antriebsrads größer als 366 N·m ist.

12. Rasenmäher mit Stehplattform nach Anspruch 1, wobei Spezifikationen der mindestens zwei Antriebsräder 23×10.5-12 umfassen.

13. Rasenmäher mit Stehplattform nach Anspruch 1, wobei, wenn sich der Rasenmäher mit Stehplattform an einem um einen Winkel von 20° oder weniger geneigten Hang befindet, eine Geradeausfahrfähigkeit des Rasenmähers mit Stehplattform in einer Hangbreitenrichtung eine Abweichung von 3 Metern oder weniger innerhalb von 50 Metern erreicht.

## Revendications

1. Tondeuse à conducteur debout (100), comprenant :
une partie de corps (10) comprenant un châssis (11) ;
une pédale (61) destinée à recevoir un utilisateur debout et disposée à une extrémité arrière de la partie de corps ;
un ensemble de déplacement (40) supportant la partie de corps et configuré pour entraîner la tondeuse à conducteur debout en déplacement, dans laquelle l'ensemble de déplacement comprend au moins deux roues motrices (411L, 411R) et au moins deux moteurs électriques de déplacement (42), et les au moins deux moteurs électriques de déplacement entraînent respectivement les au moins deux roues motrices selon une correspondance un à un ;
un ensemble de coupe (80) comprenant un élément de tonte pour tondre l'herbe et monté sur le châssis ; et
une alimentation électrique (20) configurée pour alimenter l'ensemble de déplacement afin de permettre aux au moins deux roues motrices de délivrer un couple pour entraîner la tondeuse à conducteur debout en déplacement et configurée en outre pour alimenter l'ensemble de coupe afin de permettre à l'élément de tonte de couper de la végétation ; dans laquelle
l'ensemble de déplacement comprend des roues de déplacement arrière (411) et des roues de déplacement avant (412), les roues de déplacement arrière comprennent les au moins deux roues motrices, les au moins deux roues motrices tournent autour d'un axe arrière (402), les roues de déplacement avant tournent autour d'un axe avant (403), et une distance entre l'axe avant et l'axe arrière constitue un empattement de la tondeuse à conducteur debout ; **caractérisée en ce que**
un rapport d'un couple de sortie maximal d'une roue motrice individuelle parmi les au moins deux roues motrices à un poids à vide de la tondeuse à conducteur debout est supérieur ou égal à 1,2 N·m/kg ; et
lorsque la tondeuse à conducteur debout est à vide, un rapport d'une distance entre un centre de gravité global M de la tondeuse à conducteur debout et l'axe arrière à l'empattement de la tondeuse à conducteur debout est supérieur ou égal à 0,25 et inférieur ou égal à 0,35.

2. Tondeuse à conducteur debout selon la revendication 1, dans laquelle les au moins deux roues motrices comprennent une roue motrice gauche et une roue motrice droite, et la roue motrice gauche et la roue motrice droite sont entraînées respectivement par un premier moteur électrique de déplacement et un second moteur électrique de déplacement.

3. Tondeuse à conducteur debout selon la revendication 2, comprenant en outre un ensemble de transmission (45) configuré pour convertir un couple des au moins deux moteurs électriques de déplacement ou le transmettre aux au moins deux roues motrices.

4. Tondeuse à conducteur debout selon la revendication 1, dans laquelle un rapport d'une puissance de sortie nominale de l'ensemble de déplacement au poids à vide de la tondeuse à conducteur debout est supérieur ou égal à 7 W/kg.

5. Tondeuse à conducteur debout selon la revendication 1, dans laquelle un rapport d'une puissance de sortie maximale de la roue motrice individuelle au poids à vide de la tondeuse à conducteur debout est supérieur ou égal à 8,7 W/kg.

6. Tondeuse à conducteur debout selon la revendication 1, dans laquelle l'alimentation électrique comprend une pluralité de blocs-batteries (21), et au moins un bloc-batterie de la pluralité de blocs-batteries est monté de manière amovible sur une partie d'accouplement (83) de la tondeuse à conducteur debout.

7. Tondeuse à conducteur debout selon la revendication 6, dans laquelle le poids à vide de la tondeuse à conducteur debout est défini comme un poids global de la tondeuse à conducteur debout lorsque tous les blocs-batteries pouvant être reçus dans la partie d'accouplement de la tondeuse à conducteur debout sont montés et que l'utilisateur n'est pas transporté.

8. Tondeuse à conducteur debout selon la revendication 1, dans laquelle, lorsque la tondeuse à conducteur debout est dans un état occupé où un utilisateur d'un poids de 90 kg se tient debout sur la plateforme (90), un rapport d'une distance entre un centre de gravité global M de la tondeuse à conducteur debout et l'axe arrière à l'empattement de la tondeuse à conducteur debout est supérieur ou égal à 0,2 et inférieur ou égal à 0,3.

9. Tondeuse à conducteur debout selon la revendication 1, dans laquelle, lorsque la tondeuse à conducteur debout est dans un état occupé où un utilisateur d'un poids de 90 kg se tient debout sur la plateforme (90), une part du poids répartie sur les roues de déplacement avant représente 24 % à 27 % d'un poids global de la tondeuse à conducteur debout.

10. Tondeuse à conducteur debout selon la revendication 1, dans laquelle, lorsque la tondeuse à conducteur debout est dans un état occupé où un utilisateur d'un poids de 90 kg se tient debout sur la plateforme (90), une part du poids répartie sur les roues de déplacement avant représente 20 % à 30 % d'un poids global de la tondeuse à conducteur debout.

11. Tondeuse à conducteur debout selon la revendication 1, dans laquelle un couple de sortie de la roue motrice individuelle est supérieur à 366 N·m.

12. Tondeuse à conducteur debout selon la revendication 1, dans laquelle des spécifications des au moins deux roues motrices comprennent 23×10.5-12.

13. Tondeuse à conducteur debout selon la revendication 1, dans laquelle, lorsque la tondeuse à conducteur debout se trouve sur une pente inclinée selon un angle de 20° ou moins, une capacité de déplacement rectiligne de la tondeuse à conducteur debout dans une direction de largeur de la pente atteint un écart de 3 mètres ou moins sur une distance de 50 mètres.
